(19) Europäisches Patentamt / European Patent Office / Office européen des brevets

(11) **EP 1 831 736 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.11.2017 Patentblatt 2017/47**

(45) Hinweis auf die Patenterteilung:
**16.04.2008 Patentblatt 2008/16**

(21) Anmeldenummer: **05820561.8**

(22) Anmeldetag: **07.12.2005**

(51) Int Cl.:
**G02B 5/18** (2006.01)    **B42D 15/00** (2006.01)

(86) Internationale Anmeldenummer:
**PCT/EP2005/013120**

(87) Internationale Veröffentlichungsnummer:
**WO 2006/066731 (29.06.2006 Gazette 2006/26)**

(54) **GITTERBILD ZUR DARSTELLUNG VON ECHTFARBBILDERN UND VERFAHREN ZU SEINER HERSTELLUNG**

GRID IMAGE FOR REPRESENTING FAST-COLOR IMAGES, AND METHOD FOR THE PRODUCTION THEREOF

IMAGE QUADRILLÉE DESTINÉE À REPRÉSENTER DES IMAGES EN COULEURS RÉELLES ET PROCÉDÉ DE FABRICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.12.2004 DE 102004060672**

(43) Veröffentlichungstag der Anmeldung:
**12.09.2007 Patentblatt 2007/37**

(73) Patentinhaber: **Giesecke & Devrient GmbH**
**81677 München (DE)**

(72) Erfinder:
• **KAULE, Wittich**
  **82275 Emmering (DE)**
• **RAUSCHER, Wolfgang**
  **81677 München (DE)**
• **DICHTL, Marius**
  **81371 München (DE)**

(74) Vertreter: **Zeuner Summerer Stütz**
**Nußbaumstrasse 8**
**80336 München (DE)**

(56) Entgegenhaltungen:
| | |
|---|---|
| EP-A- 0 240 261 | EP-A2- 0 585 966 |
| EP-A2- 0 828 203 | EP-B1- 0 766 103 |
| WO-A-98/23979 | WO-A-02/091041 |
| WO-A1-98//40223 | WO-A1-94//128444 |
| WO-A1-2005//039172 | DE-A1- 10 243 413 |
| US-A- 941 960 | US-A- 4 897 300 |
| US-A- 5 797 632 | US-A- 5 969 863 |
| US-A- 6 088 161 | |

• Auszug aus Wikipedia "List of color film systems"
• WINDSOR H.H.: 'Miracles of new color movies' POPULAR MECHANICS MAGAZINE Bd. 71, Nr. 3, März 1939,

EP 1 831 736 B2

# Beschreibung

Die Erfindung betrifft ein Gitterbild zur Darstellung zumindest eines Echtfarbenbilds, das eine Mehrzahl von Echtfarbgebieten aufweist, die bei Beleuchtung des Gitterbilds in einer gewünschten Echtfarbe leuchten.

Es ist bekannt, Hologramme, holographische Gitterbilder und andere hologrammähnliche Beugungsstrukturen zur Echtheitsabsicherung von Kreditkarten, Wertdokumenten, Produktverpackungen und dergleichen einzusetzen. Derartige Beugungsstrukturen werden im Allgemeinen durch die Belichtung einer lichtempfindlichen Schicht mit überlagerter kohärenter Strahlung hergestellt. Echte Hologramme entstehen dabei, indem ein Objekt mit kohärentem Laserlicht beleuchtet wird und das von dem Objekt gestreute Laserlicht mit einem unbeeinflussten Referenzstrahl in der lichtempfindlichen Schicht überlagert wird.

Bestehen die in der lichtempfindlichen Schicht überlagerten Lichtstrahlen andererseits aus räumlich ausgedehnten, einheitlichen kohärenten Wellenfeldem, so entstehen bei der Überlagerung holographische Beugungsgitter. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut werden, erzeugt das holographische Beugungsgitter lediglich einen optisch variablen Farbeindruck, jedoch keine Bilddarstellung.

Auf Grundlage von holographischen Beugungsgittern lassen sich holographische Gitterbilder erzeugen, indem nicht die gesamte Fläche des lichtempfindlichen Materials mit einem einheitlichen holographischen Beugungsgitter belegt wird, sondern indem geeignete Masken verwendet werden, um jeweils nur Teile der Aufnahmefläche mit einem von mehreren verschiedenen einheitlichen Gittermustern zu belegen. Ein solches holographisches Gitterbild setzt sich somit aus mehreren Gitterfeldern mit unterschiedlichen Beugungsgittermustern zusammen. Durch geeignete Anordnung der Gitterfelder lässt sich mit einem derartigen holographischen Gitterbild eine Vielzahl unterschiedlicher Bildmotive darstellen.

Bei den Beugungsgittermustern eines holographischen Gitterbilds handelt es sich üblicherweise um Strichgitter mit einer Vielzahl nebeneinander liegen der paralleler Gitterlinien. Die Beugungsgitter eines jeden Gitterfelds bzw. eines jeden Gitterbildbereichs sind durch die Gitterkonstante und die Winkelorientierung des Gittermusters und den Umriss oder die Kontur des Bereichs charakterisiert. Die Winkelorientierung des Gittermusters wird üblicherweise durch den Azimutwinkel, also den Winkel zwischen den parallelen Gitterlinien und einer willkürlich festgelegten Referenzrichtung beschrieben. Bei holographischen Beugungsgittern werden die Gitterkonstante und der Azimutwinkel üblicherweise über die Wellenlänge und die Einfallsrichtung der belichtenden Wellenfelder eingestellt und die Umrisse der Felder mithilfe von Belichtungsmasken erzeugt.

Generell lässt sich sagen, dass die Gitterkonstante des Gittermusters in einem Gitterbildbereich wesentlich für die Farbe dieses Bereichs bei der Betrachtung ist, während der Azimutwinkel für die Sichtbarkeit des Bildbereichs aus bestimmten Richtungen verantwortlich ist. Auf Grundlage dieser Technik können daher optisch variable Bilder, wie etwa Wechsel- oder Bewegungsbilder, oder auch plastisch erscheinende Bilder erzeugt werden.

Gittermuster mit gegebener Gitterkonstante beugen nur Licht einer bestimmten Wellenlänge in die Betrachtungsrichtung, so dass die mit einem einheitlichen Gittermuster belegten Gitterfelder, wenn sie mit weißem Licht beleuchtet werden, stets in einer der Spektralfarben leuchten. Um die in der Natur vorkommenden Farben, die im Rahmen dieser Anmeldung "Echtfarben" genannt werden, mit Gitterbildern darstellen zu können, werden diese Echtfarben als Mischung bestimmter Grundfarben dargestellt. Da das menschliche Auge drei verschiedene Zapfensysteme mit sich überlappenden Empfindlichkeitsbereichen im roten, grünen und blauen Teil des sichtbaren Spektrums besitzt, ist es eine übliche Vorgehensweise, die Farben Rot, Grün und Blau als Grundfarben auszuwählen. In den Echtfarbenbereichen eines Gitterbilds werden dann kleine Unterbereiche definiert, in die drei verschiedene Gitter eingebracht werden, die rotes, grünes und blaues Licht in die gewünschte Betrachtungsrichtung beugen. Die mit den Gittermustern belegten Flächenanteile werden dabei entsprechend den Rot-, Grün- und Blau-Anteilen der jeweiligen Echtfarben gewählt.

Ein Beispiel für eine solche Vorgehensweise ist in der Druckschrift EP 0 240 262 A2 offenbart. Bei dem dort beschriebenen Verfahren werden für die Grundfarben Rot, Grün und Blau drei verschiedene Trennmasken verwendet, durch die jeweils nur ein Drittel einer photographischen Platte mit einem Interferenzmuster belichtet wird, das der betreffenden Grundfarbe entspricht.

Bei dem in der Druckschrift EP 0 585 966 A2 beschriebenen Verfahren werden in den Bereichen eines Gitterbildes, in denen Mischfarben erscheinen sollen, verschiedene Gittermuster übereinander geschrieben, deren Gitterkonstanten so gewählt sind, dass sie in der Betrachtungsrichtung in einer gewünschten Mischfarbe leuchten.

Außer den Mischfarben können in einem Echtfarbenbild natürlich auch ungemischte Farben vorkommen, nämlich beispielsweise die Grundfarben Rot, Grün und Blau. Auch Farben, die sich aus zwei Grundfarben mischen lassen, etwa Rot + Grün, Grün + Blau oder Blau + Rot, gibt es.

Um jede beliebige Farbe darstellen zu können, müssen jedoch im Stand der Technik, abgesehen von den genannten Ausnahmen, viele Gittermuster, nämlich 3 Gittermuster für die 3 Grundfarben pro Bildpunkt neben- oder übereinander geschrieben werden. Davon ausgehend liegt der Erfindung die Aufgabe zugrunde, ein gattungsgemäßes Gitterbild anzugeben, das einfach aufgebaut ist, und das ein oder mehrere Bilder in Echtfarben darstellen kann.

Diese Aufgabe wird durch das Gitterbild mit den Merkmalen des Hauptanspruchs gelöst. Ein Verfahren zum Herstellen eines solchen Gitterbilds und ein Gegenstand mit einem solchen Gitterbild sind in den nebengeordneten Ansprüchen angegeben. Weiterbildungen der Erfindung sind Gegenstand der Unteransprüche.

Nach der Erfindung bestehen bei einem Gitterbild der eingangs genannten Art die Echtfarbgebiete anstatt aus drei zum überwiegenden Teil nur aus zwei Spektralfarbbereichen, die verschiedene, durch eine Gitterkonstante und eine Winkelorientierung definierte Gittermuster enthalten. Bei Beleuchtung mit weißem Licht erzeugen die Spektralfarbbereiche durch Selektion der passenden Wellenlängen und Spektralfarben durch additive Farbmischung zusammen in Betrachtungsrichtung die Echtfarbe des Echtfarbgebiets.

Die Erfindung beruht auf der Beobachtung, dass bereits zwei Spektralfarben ausreichen, um jede beliebige Echtfarbe durch additive Farbmischung zu erzeugen. Im Vergleich zu der üblichen Kombination aus drei vorgewählten Grundfarben kann so ein Drittel der erforderlichen Gittermuster eingespart werden. Die erfindungsgemäßen Gitterbilder sind daher einfacher aufgebaut und wegen der geringeren Zahl an Gitterrändern auch leuchtstärker.

Wie nachfolgend im Detail erläutert, muss man dafür auf die Bindung an feste Grundfarben zumindest zum Teil verzichten. Um alle Echtfarben aus zwei Spektralfarben durch additive Farbmischung erzeugen zu können, müssen je nach Vorgehensweise die Wellenlängen einer der Spektralfarben oder auch die Wellenlängen beider Spektralfarben für jedes Echtfarbgebiet separat festgelegt werden. Insbesondere bei einer automatischen Erzeugung der Gitterbilder mit einem Computer, bei der die Gitterparameter für die einzelnen Gittermuster der Bildbereiche rechnergestützt ermittelt werden, kann diese Festlegung jedoch ohne weiteres in die Berechnung der Gitterparameter integriert werden.

Bevorzugt liegt die Ausdehnung der Spektralfarbbereiche zumindest in einer Dimension unterhalb der Auflösungsgrenze des Auges. Beispielsweise können die Spektralfarbbereiche als schmale Streifen ausgebildet sein, deren Breite unterhalb der Auflösungsgrenze des Auges liegt. Die Spektralfarbbereiche können auch durch kleine Rechteckelemente beliebiger Form mit einer Größe unterhalb der Auflösungsgrenze des Auges gebildet sein. Es versteht sich, dass bei der Festlegung der Größe der intendierte Betrachtungsabstand mitberücksichtigt werden kann.

Die Spektralfarbbereiche enthalten in einer vorteilhaften Ausgestaltung des erfindungsgemäßen Gitterbilds jeweils ein Gittermuster, das einer Spektralfarbe entspricht und bei Beleuchtung diese Spektralfarbe erzeugt, wobei die Spektralfarben und das Flächenverhältnis der beiden den Spektralfarben entsprechenden Gittermuster so gewählt sind, dass die beiden Spektralfarbbereiche durch additive Farbmischung den Buntton und die Sättigung der Echtfarbe des Echtfarbgebiets erzeugen. Die beiden Spektralfarbbereiche eines Echtfarbgebiets sind darüber hinaus vorzugsweise in einem Flächenanteil mit dem jeweiligen Gittermuster gefüllt, der der Helligkeit der Echtfarbe entspricht. Wie bekannt, ist durch die Angabe des Bunttons, der Sättigung und der Helligkeit jede für das Auge unterscheidbare Echtfarbe eindeutig charakterisiert.

Dabei ist mit Vorteil vorgesehen, dass die Gittermuster der beiden Spektralfarbbereiche die jeweilige Spektralfarbe mit im Wesentlichen gleicher Effektivität aus der Beleuchtungsstrahlung erzeugen, da dann das Flächenverhältnis ohne weiteres ein korrektes Maß für die Helligkeitsanteile der beiden Gittermuster darstellt.

Zusätzlich zu dem Flächenanteil oder sogar anstelle des Flächenanteils kann die Effektivität, also der Anteil der zurückgeworfenen Strahlung in der gewünschten Farbe, zur Einstellung der Helligkeit der Gittermusterbereiche eingesetzt werden. Die beiden Spektralfarbbereiche eines Echtfarbgebiets werden dann vorteilhaft mit Gittermustern einer solchen Effektivität und eines solchen Flächenanteils gefüllt, dass sie bei Beleuchtung die Helligkeit der Echtfarbe reproduzieren.

Nach einer vorteilhaften Erfindungsvariante enthält ein erster der Spektralfarbbereiche jeweils ein Gittermuster, das einer Spektralfarbe entspricht.

Das Gittermuster des zweiten Spektralfarbbereichs ist dann so auf die ausgewählte Spektralfarbe des ersten Spektralfarbbereichs abgestimmt, dass die beiden Spektralfarben durch additive Farbmischung den Buntton und die Sättigung der Echtfarbe des Echtfarbgebiets erzeugen. Die Helligkeit der Echtfarbe kann, wie oben angegeben, über den Flächenanteil der Gittermuster, also den Füllgrad der Spektralfarbbereiche, berücksichtigt werden.

Die beiden Spektralfarbbereiche werden bei dieser Variante im einfachsten Fall mit gleich großen Flächen ausgebildet. In einer Weiterbildung der Erfindung kann jedoch durch Abstimmung des Größenverhältnisses der beiden Spektralfarbbereiche auch ein Weißabgleich vorgenommen werden, der beispielsweise der Farbtemperatur der Beleuchtungsquelle oder einer unterschiedlichen Effektivität von mikrolithographisch hergestellten Gittermustern bei verschiedenen Gitterkonstanten Rechnung trägt.

Dazu werden die Größen der beiden Spektralfarbbereiche so festgesetzt, dass sie unter vorbestimmten Beleuchtungsbedingungen bei vollständiger Füllung des ersten Spektralbereichs mit dem Gittermuster der ausgewählten Spektralfarbe und des zweiten Spektralbereichs mit einem Gittermuster, das der dazu komplementären Spektralfarbe entspricht, durch additive Farbmischung zusammen reines Weiß erzeugen. Beispielsweise werden bei Verwendung von Rot (620 nm) bzw. Blau (450 nm) für den ersten Spektralfarbbereich als komplementäre Spektralfarben Cyan (mit $\lambda_{Cyan} = 485$ nm) bzw. Gelbgrün (mit $\lambda_{Gelbgrün} = 565$ nm) verwendet.

Mit Vorteil bestehen die Echtfarbgebiete zu mehr als 90% und insbesondere zu mehr als 95% oder sogar zu mehr als 98% aus zwei Spektralfarbbereichen.

Der verbleibende Teil der Echtfarbgebiete enthält dabei aus einem Spektralfarbbereich bestehende Echtfarbgebiete und/oder aus drei Spektralfarbbereichen bestehende Echtfarbgebiete.

Die Erfindung enthält auch ein Verfahren zum Erzeugen eines gattungsgemäßen Gitterbilds, bei dem die Echtfarbgebiete zum überwiegenden Teil aus zwei Spektralfarbbereichen gebildet werden, die mit verschiedenen, durch eine Gitterkonstante und eine Winkelorientierung definierte Gittermuster versehen werden, und die bei Beleuchtung durch additive Farbmischung zusammen die Echtfarbe des Echtfarbgebiets erzeugen.

Vorteilhaft werden dabei für die Echtfarbe eines Echtfarbgebiets zwei Spektralfarben und ein Anteilsverhältnis so bestimmt, dass die Spektralfarben bei anteiliger Mischung durch additive Farbmischung den Buntton und die Sättigung der Echtfarbe des Echtfarbgebiets erzeugen. Die Spektralfarbbereiche werden dann jeweils mit einem diesen Spektralfarben entsprechenden Gittermuster in einem dem Anteilsverhältnis entsprechenden Flächenverhältnis versehen.

In einer ersten Verfahrensvariante werden die beiden Spektralfarben dadurch bestimmt, dass eine erste Spektralfarbe aus einer vorbestimmten Gruppe von Spektralfarben, beispielsweise Rot und Blau, ausgewählt wird, und die zweite Spektralfarbe und das Anteilsverhältnis so auf die erste Spektralfarbe abgestimmt wird, dass die beiden Spektralfarben anteilig gemischt durch additive Farbmischung den Buntton und die Sättigung der Echtfarbe des Echtfarbgebiets erzeugen. Wie oben beschrieben, kann dabei durch Abstimmung der Größe der beiden Spektralfarbbereiche zusätzlich ein Weißabgleich erfolgen.

Bei einer anderen Erfindungsvariante werden die Spektralfarben dadurch bestimmt, dass in einer Farbtafel der Farbort der Echtfarbe angegeben wird, die Spektralfarben durch die beiden Schnittpunkte einer Geraden durch den Farbort der Echtfarbe mit dem Spektralfarbenzug der Farbtafel bestimmt werden, und das Anteilsverhältnis beispielsweise nach dem weiter unten beschriebenen Verfahren aus den Farbabständen der beiden Schnittpunkte von dem Farbort der Echtfarbe bestimmt wird. Dabei wird unter einer Farbtafel eine zweidimensionale graphische Darstellung der durch additive Farbmischung herstellbaren Beziehungen zwischen den (durch Buntton und Sättigung gegebenen) Farbarten verstanden. Die Farborte der Spektralfarben bilden in einer solchen Farbtafel einen Spektralfarbenzug, auf dem die Farben maximale Sättigung aufweisen.

Die Gerade durch den Farbort der Echtfarbe wird zweckmäßig so gewählt, dass sie etwa parallel zur Purpurgeraden der Farbtafel verläuft. Eine andere vorteilhafte Vorgehensweise besteht darin, dass die Spitze des Spektralfarbenzugs mit dem Mittelpunkt auf der Purpurgeraden verbunden wird, und die Gerade durch den Farbort der Echtfarbe im Wesentlichen senkrecht auf dieser Verbindungslinie gewählt wird. Alternativ kann auch die Spitze des Spektralfarbenzugs mit dem Weißpunkt W verbunden werden und die Gerade durch den Farbort A der Echtfarbe im Wesentlichen senkrecht auf dieser Verbindungslinie gewählt werden. Durch alle diese und ähnliche Vorgehensweisen kann eine hohe Farbkonstanz beim Verkippen des Gitterbilds erreicht werden, wie weiter unten im Detail erläutert.

Ein eindrucksvoller Effekt lässt sich erzielen, wenn das Echtfarbenbild ein Graustufenbild darstellt, bei dem die Echtfarben wie bei einer Schwarz-Weiß-Photographie durch unbunte Farben verschiedener Helligkeitsstufen gegeben sind. Es versteht sich, dass auch Echtfarbenbilder in Sepia-Tönung oder anderen Farbtönungen dargestellt werden können. Bei diesen Echtfarbenbildern befinden sich alle auftretenden Farben an demselben Farbort in der Farbtafel (etwa den Unbuntpunkt W bei Graustufenbildern) und unterscheiden sich nur durch ihre Helligkeit.

Ebene oder gekrümmte Gitterbilder der beschriebenen Art können auf einfache, nicht holographische Weise erzeugt werden, indem

a) eine Orientierung für das Gitterbild im Raum festgelegt wird, in welcher das vorgegebene Echtfarbenbild sichtbar ist,

b) eine Echtfarbe für jeden Bildbereich des vorgegebenen Echtfarbenbilds festgelegt wird, in der der jeweilige Bildbereich bei der festgelegten Orientierung erscheint,

c) Gitterbildbereiche des Gitterbilds festgelegt werden, die jeweils einem Bildbereich zugeordnet sind und deren Anordnung innerhalb des Gitterbilds im Wesentlichen der Anordnung der Bildbereiche in dem vorgegebenen Bild entspricht,

d) ein oder mehrere Echtfarbgebiete als Unterbereiche innerhalb jedes Gitterbildbereichs festgelegt werden und für jeden der Spektralfarbbereiche der Unterbereiche aus der festgelegten Orientierung des Gitterbilds und der bestimmten Spektralfarbe des Spektralfarbbereichs unter Verwendung der Beziehung

$$\vec{n}(\vec{r}) \times \left( \vec{k}'(\vec{r}) - \vec{k}(\vec{r}) \right) = m\vec{g} \qquad (L)$$

eine Gitterkonstante und eine *Winkelorientierung bestimmt werden, wobei r einen* Bezugsaufpunkt in dem Unterbereich des Gitterbilds, $\vec{n}(\vec{r})$, $\vec{k}'(\vec{r})$ und $\vec{k}(\vec{r})$ den Normalenvektor, den Betrachtungsvektor bzw. den Beleuchtungsvektor im Bezugsaufpunkt r, m die Beugungsordnung und $\vec{g}$ den Gittervektor für den Unterbereich darstellen, und

e) ein Gitterbild mit Gitterbildbereichen in einem Substrat erzeugt wird, wobei jeder Spektralfarbbereich mit einem Gittermuster gefüllt wird, dessen Gitterkonstante und Winkelorientierung durch die in Schritt d) für diesen Spektralfarbbereich bestimmte Gitterkonstante und Winkelorientierung gegeben sind.

In der angegebenen Beziehung (L) stellt der Beleuchtungsvektor $\vec{k}(\vec{r})$ einen Vektor der Länge $2\pi/\lambda$ dar, dessen Richtung durch die Verbindungslinie zwischen einem Beleuchtungspunkt und dem Bezugsaufpunkt des jeweiligen Unterbereichs gegeben ist. $\lambda$ ist dabei die ausgewählte Wellenlänge aus dem Spektrum des einfallenden Lichts, die zum Erzeugen der Echtfarbe benötigt wird. Der Betrachtungsvektor $\vec{k}'(\vec{r})$ ist ein Vektor der Länge $2\pi/\lambda$, dessen Richtung durch die Verbindungslinie zwischen dem Bezugsaufpunkt des jeweiligen Unterbereichs und einem Betrachtungspunkt gegeben ist. Das Gittermuster ist durch den Gittervektor $\vec{g}$ charakterisiert, der einen Vektor der Länge $2\pi/a$ darstellt, der in Richtung parallel zu den Gitterlinien zeigt. a ist dabei die Gitterkonstante, d.h. der Abstand der Gitterlinien. Die Lage des im allgemeinen Fall gekrümmten Gitterbilds im Raum wird durch den Normalenvektor $\vec{n}(\vec{r})$ angegeben, der einen Vektor der Länge 1 darstellt, der senkrecht auf der lokalen Gitterebene steht.

Die Formel (L) stellt eine Beziehung her zwischen Gitterkonstante und gebeugter Wellenlänge unter Einbeziehung der Winkel zwischen Beleuchtungsrichtung, Betrachtungsrichtung und Gitterlage im Raum. Die Vektorformel (L) ist unabhängig von Koordinatensystemen. Die Vektoren können beliebig im Raum liegen. Je nach Wahl des Koordinatensystems und der zur Beschreibung konkret verwendeten Größen lässt sich die Beziehung (L) in verschiedener Weise darstellen. Nähere Details sind in der ebenfalls abhängigen deutschen Patentanmeldung 10 2004 006 771.6 angegeben, deren Offenbarung insoweit in die vorliegende Anmeldung aufgenommen wird.

Die lokale Beziehung (L) beschreibt in allgemeinster Form den Zusammenhang zwischen den lokalen, ortsabhängigen Vektoren. In vielen Situationen können die lokalen Vektoren durch konstante, globale Vektoren ersetzt und die Berechnung dadurch vereinfacht werden.

Beispielsweise ist der Normalenvektor $\vec{n}(\vec{r})$ bei einem ebenen Gitterbild über der Fläche des Gitterbilds konstant, so dass für die Berechnung ebener Gitterbilder $\vec{n}(\vec{r})$ durch einen konstanten Vektor $\vec{n}$ ersetzt werden kann.

Bei gekrümmten Gitterbildern werden Form und Größe der Unterbereiche in Schritt d) vorzugsweise abhängig von der Krümmung des Gitterbilds festgelegt. Insbesondere wird die Form und Größe der Unterbereiche mit Vorteil so gewählt, dass der Normalenvektor $\vec{n}(\vec{r})$ in jedem Unterbereich in guter Näherung als konstant angenommen werden kann. Die gekrümmte Gitterbildfläche wird so durch kleine flache Unterbereiche approximiert.

Im allgemeinen Fall wird zur Bestimmung von Gitterkonstante und Winkelorientierung für jeden Unterbereich ein über die Fläche des Gitterbilds variierender Betrachtungsvektor $\vec{k}'(\vec{r})$ verwendet. Darüber hinaus kann im allgemeinen Fall auch ein über die Fläche des Gitterbilds variierender Beleuchtungsvektor $\vec{k}(\vec{r})$ verwendet werden.

Zur Vereinfachung der Berechnung der Gitterkonstante und der Winkelorientierung kann für jeden Unterbereich ein über die Fläche jedes Gitterbildbereichs oder über die gesamte Gitterbildfläche konstanter Betrachtungsvektor $\vec{k}'$ verwendet werden, dessen Richtung durch die Verbindungslinie zwischen einem für das Gitterbild repräsentativen Bezugspunkt und einem Betrachtungspunkt gegeben ist. In gleicher Weise kann für jeden Unterbereich ein über die Fläche jedes Gitterbildbereichs oder über die gesamte Gitterbildfläche konstanter Beleuchtungsvektor $\vec{k}$ verwendet werden, dessen Richtung durch die Verbindungslinie zwischen einem Beleuchtungspunkt und für das Gitterbild repräsentativen gegeben ist.

Erzeugt man ebene Gitterbilder, und legt man den Betrachtungs- und den Beleuchtungspunkt ins Unendliche, so ergibt sich ein besonders einfacher, aber wichtiger Grenzfall, bei dem alle beteiligten Vektoren ortsunabhängig sind. Die lokale Beziehung (L) vereinfacht sich dann zu der globalen Beziehung

$$\vec{n} \times \left( \vec{k}' - \vec{k} \right) = m\vec{g} \qquad\qquad (G)$$

Die einfachere Beziehung (G) stellt auch in Fällen, in denen die reale Beleuchtungsquelle bzw. der reale Betrachtungspunkt, bezogen auf die Gitterbildgröße, weit von diesem entfernt sind, eine ausgezeichnete Näherung für ebene Gitterbilder dar.

Das hier beschriebene Verfahren gibt dem Fachmann eine einfache Methode an die Hand, um aus den vorgegebenen Betrachtungsbedingungen und den gewünschten Echtfarbbildern die Gitterparameter eines Gitterbilds zu bestimmen. Auf diese Art und Weise lassen sich praktisch alle bei Gitterbildern bekannten und gefragten Effekte leicht berechnen und in höchster Qualität erzeugen. Die Gitterformeln (L) und (G) eignen sich besonders zur Bestimmung von Gitterdaten in komplexen Konfigurationen, wie sie bei realen Betrachtungsbedingungen vorkommen, insbesondere für

Konfigurationen bei denen $\vec{n} \times \vec{k}$ nicht parallel oder senkrecht zu $\vec{n} \times \vec{k}'$ liegt.

Die Gitterbildbereiche werden mit Vorteil in Schritt e) mit einer Form und einer relativen Lage erzeugt, die im Wesentlichen der Form und der relativen Lage der zugeordneten Bildbereiche entsprechen. Bei Betrachtung des Gitterbilds in der jeweiligen Orientierung zeigen die Gitterbildbereiche dem Betrachter dann das aus den Bildbereichen zusammengesetzte Bild. Dabei ist nicht erforderlich, dass die Gitterbildbereiche in Form und Lage das Bild exakt reproduzieren. So können beispielsweise sehr kleine Bildstrukturen, insbesondere unterhalb der Auflösungsgrenze des Auges, weggelassen werden, um etwa ein helleres Bild der Hauptstrukturen zu erhalten.

Auch können Teile der Gitterbildbereiche mit einer Größe unterhalb der Auflösungsgrenze des Auges ganz weggelassen werden und die Lücken mit Gitterbildbereichen eines anderen oder mehrerer anderer Bilder gefüllt werden. Auf diese Weise kann ein einziges Gitterbild in unterschiedlichen Orientierungen mehrere Bilder zeigen, ohne dass sichtbaren Lücken in einem der Bilder auftreten. Zeigt ein Gitterbild in dieser Art mehrere Bilder unter unterschiedlichen Beleuchtungs- und Betrachtungsrichtungen, so werden die oben angegebenen Schritte a) bis d) vorteilhaft für jedes der mehreren Bilder durchgeführt.

In manchen Gestaltungen werden die Gitterbildbereiche, die Bildbereichen verschiedener Bilder zugeordnet sind, einander zumindest teilweise überlappen. In einer bevorzugten Ausführung werden die überlappenden Gitter einfach übereinander belichtet oder mikrolithographisch übereinander geschrieben. In einer anderen bevorzugten Ausgestaltung werden die überlappenden Gitterbildbereiche dann ineinander verschachtelt. In einer vorteilhaften Ausgestaltung werden die überlappenden Gitterbildbereiche dazu in schmale Streifen zerlegt und die schmalen Streifen der Gitterbildbereiche alternierend nebeneinander angeordnet. Beispielsweise wird bei der Verschachtelung der Gitterbildbereiche zweier Bilder in jedem Gitterbildbereich jeder zweite Streifen weggelassen.

Die Streifenzerlegung erfolgt dabei vorzugsweise so, dass das Fehlen jedes zweiten Streifens in dem gezeigten Bild mit bloßem Auge nicht erkennbar ist oder jedenfalls den Bildeindruck nicht wesentlich stört. Insbesondere wird die Breite der schmalen Streifen unterhalb der Auflösungsgrenze des bloßen Auges gewählt. Besonders gute Ergebnisse lassen sich erzielen, wenn die schmalen Streifen parallel zu einer Dreh- oder Kippachse des Gitterbildes ausgerichtet werden.

Bei einer anderen vorteilhaften Ausgestaltung werden die Gitterbildbereiche, die überlappenden Bildbereichen unterschiedlicher Bilder zugeordnet sind, in beliebig geformte kleine Teilbereiche zerlegt und die Teilbereiche der Gitterbildbereiche ineinander verschachtelt angeordnet. Die Gitterbildbereiche werden dabei in gleichartig oder auch ungleichartige geformte Teilbereiche, insbesondere in rechteckige, runde, ovale, wabenförmige oder polygonal begrenzte Teilbereiche zerlegt. Die Teilbereiche sind vorzugsweise den Belegungsverhältnissen angepasst und daher typischerweise ungleich groß. Dadurch werden auch sonst leicht auftretende Moiréeffekte vermieden. In den Figuren sind die Teilbereiche der einfacheren Darstellung halber stets als Rechtecke dargestellt. Zumindest eine charakteristische Abmessung der kleinen Teilbereiche wird vorteilhaft unterhalb der Auflösungsgrenze des bloßen Auges gewählt. In einer weiteren Ausgestaltung werden Gitterbild mit überlappenden Bildbereichen übereinander geschrieben.

Nach einer bevorzugten Erfindungsvariante zeigt das Gitterbild in unterschiedlichen Orientierungen unterschiedliche Bilder, so dass für den Betrachter bei entsprechender Bewegung des Gitterbildes ein Wechselbild entsteht. In einer anderen Variante zeigt das Gitterbild ein Bildmotiv in unterschiedlichen Bewegungszuständen, so dass für den Betrachter bei entsprechender Bewegung des Gitterbildes ein Bewegungsbild entsteht. Bei einer weiteren Variante zeigt das Gitterbild eine sich vergrößernde oder verkleinernde Umrisslinie eines Bildmotivs, so dass für den Betrachter bei entsprechender Bewegung des Gitterbildes ein Pumpbild entsteht.

Nach noch einer weiteren Variante zeigt das Gitterbild zumindest zwei Ansichten eines Bildmotivs aus unterschiedlichen Betrachtungsrichtungen, wobei die unterschiedlichen Orientierungen der Ansichten auf Grundlage eines vorgewählten Betrachtungsabstands des Gitterbilds so festgesetzt werden, dass für den Betrachter ein Stereobild des Bildmotivs entsteht. Das Gitterbild kann dabei vorteilhaft mehrere Ansichten des Bildmotivs aus unterschiedlichen Betrachtungsrichtungen zeigen, wobei die unterschiedlichen Orientierungen der Ansichten so festgelegt werden, dass für den Betrachter bei entsprechender Bewegung des Gitterbildes eine räumliche Ansicht des Bildmotivs entsteht. Einen Spezialfall des Stereobilds stellt das Kulissenbild dar, bei dem das Gitterbild zumindest zwei Ansichten eines Kulissenmotivs zeigt, bei dem mehrere ebene Objekte kulissenartig hintereinander angeordnet sind.

Eine weitere Variante besteht darin, dass das Gitterbild zumindest in einem Teilbereich in unterschiedlichen Orientierungen das gleiche Bild zeigt, so dass für den Betrachter bei entsprechender Bewegung des Gitterbildes in diesem Teilbereich keine Änderung des Bildinhalts auftritt. Im Allgemeinen enthalten die Gitterbilder neben diesen bei entsprechender Bewegung sich nicht verändernden Bildbereichen auch variable Bildbereiche, die dem Betrachter sich bei entsprechender Bewegung verändernde Bildeindrücke vermitteln. Für diese variablen Bildbereiche kommen insbesondere alle oben geschilderten Gitterbildvarianten infrage.

Die sich bei entsprechender Bewegung nicht verändernden Bildbereiche führen zu einer größeren Bildruhe. Darüber hinaus sind diese Bereiche selbst bei schlechter Beleuchtung noch gut erkennbar, wenn sich die variablen Bildinhalte bereits vermischen und nur noch schlecht oder nicht mehr erkennbar sind. Beispielsweise kann ein Text, eine Ziffernfolge oder ein Logo als kippkonstanter Bildinhalt in den Vordergrund, schmückendes Beiwerk mit besonderen optischen Effekten in den Hintergrund gelegt werden. Dadurch wird eine optimale Lesbarkeit wesentlicher Informationen selbst bei ungünstigen Beleuchtungsverhältnissen mit einer optisch ansprechenden Gestaltung verbunden. ,

Da ein einfaches Gitter nicht in allen Orientierungen ein sichtbares Bild zeigen kann, wird dazu ein aus mehreren Gittern zusammengesetztes "Mischgitter" erzeugt, wobei für aufeinander folgende Orientierungen, beispielsweise für aufeinander folgende seitliche Betrachtungskippwinkel oder Drehwinkel Gitter berechnet werden, die jeweils gleichfarbig aufleuchten. Vorzugsweise werden die einzelnen Teilgitter so klein ausgebildet, dass sie mit bloßem Auge nicht aufgelöst werden können.

Die Gitterbildbereiche werden mit Vorteil in nebeneinander angeordnete schmale Streifen zerlegt, die den unter verschiedenen Orientierungen, insbesondere unter verschiedenen seitlichen Betrachtungskippwinkel oder Drehwinkeln, erkennbaren Bildbereichen zugeordnet sind, und die bevorzugt so mit Gittermustern gefüllt werden, dass die Endpunkte des Gittermusters eines Streifens mit den Anfangspunkten des Gittermusters des benachbarten Streifens zusammenfallen. Während die Streifen prinzipiell beliebig angeordnet werden können, erscheinen die Gitterbilder nämlich besonders farbintensiv, wenn die Streifen so aneinander angeschlossen werden, dass die Gitterlinien zusammenhängende Polygonzüge ergeben. Anstelle der Polygonzüge lassen sich auch glatte Kurvenzüge verwenden, beispielsweise sinusförmige Kurvenzüge, Kreissegmente, Parabelsegmente und dergleichen, wodurch die Übergänge beim Kippen völlig ruckfrei gestaltet werden können.

In allen Verfahrensvarianten wird mit Vorteil unter Berücksichtigung des Winkels zwischen dem Betrachtungsvektor $\bar{k}'(r)$ und dem Beleuchtungsvektor $\bar{k}'(r)$ in Schritt d) für jeden Unterbereich aus der festgelegten Orientierung des Gitterbilds ein Azimutwinkel relativ zu einer Referenzrichtung berechnet, der die Winkelorientierung des Gittermusters des zugeordneten Gitterbereichs beschreibt.

Für die praktische Anwendung sind die Varianten ebener oder zylindrisch gekrümmter Gitterbilder besonders wichtig. Bei der Erzeugung eines ebenen Gitterbilds wird die Orientierung des Gitterbilds im Raum mit Vorteil durch die Festlegung von Beleuchtungs- und Betrachtungsrichtungen für das Gitterbild bestimmt. Vorzugweise wird dann unter Berücksichtigung des Winkels zwischen einem vorgewählten Betrachtungsvektor und einem vorgewählten Beleuchtungsvektor in Schritt d) für jeden Bildbereich aus den festgelegten Beleuchtungs- und Betrachtungsrichtungen ein Azimutwinkel relativ zu einer Referenzrichtung berechnet, der die Winkelorientierung des Gittermusters des zugeordneten Gitterbereichs beschreibt.

Bei der Erzeugung eines zylindrisch gekrümmten Gitterbilds wird die Orientierung des Gitterbilds im Raum mit Vorteil durch Festlegung eines Drehwinkels um die Zylinderachse bestimmt. Vorzugsweise wird dann in Schritt d) unter Berücksichtigung des Winkels zwischen einem vorgewählten Betrachtungsvektor und einem vorgewählten Beleuchtungsvektor, des Drehwinkels um die Zylinderachse und der Lage des jeweiligen Unterbereichs ein Azimutwinkel relativ zu einer Referenzrichtung berechnet, der die Winkelorientierung des Gittermusters des zugeordneten Gitterbereichs beschreibt.

In einer bevorzugten Ausgestaltung der Erfindung wird das Gitterbild mit einem ausgedehnten Gitterbildbereich erzeugt, der bei Betrachtung aus einem vorgewählten kurzen Betrachtungsabstand mit im Wesentlichen konstantem Farbeindruck erscheint. Dies kann dadurch erreicht werden, dass der ausgedehnte Gitterbildbereich in eine Mehrzahl von Teilbereichen zerlegt wird, für die in Schritt d) jeweils eine Gitterkonstante und eine Winkelorientierung bestimmt wird, wobei für die Bestimmung ein Betrachtungsvektor verwendet wird, der vom jeweiligen Teilbereich zum Auge des Betrachters zeigt. In Schritt e) wird der Gitterbildbereich in dem Substrat dann mit diesen Teilbereichen erzeugt, und die Teilbereiche werden jeweils mit einem Gittermuster mit der in Schritt d) bestimmten Gitterkonstanten und Winkelorientierung gefüllt. Die Zerlegung kann auch eine so große Anzahl an Teilbereichen enthalten, dass ein Verlaufsgitter mit einer sich quasi kontinuierlich ändernden Gitterkonstante entsteht.

Diese Vorgehensweise trägt der Tatsache Rechnung, dass ein Betrachter bei einem ausgedehnten Gitterbildbereich und kurzem Betrachtungsabstand die weit auseinander liegenden Bildbereiche unter etwas unterschiedlichen Betrachtungswinkeln sieht. Insbesondere bei vertikal, also parallel zur Drehachse oder zur Kipplinie ausgedehnten Gitterbildbereichen kann es bei einheitlicher Bestimmung der Gitterparameter für die gesamte Fläche (das heißt, bei Zugrundelegung von über die Fläche konstanten Beleuchtungs- und Betrachtungsvektoren) zu Farbverschiebungen kommen. Der Gitterbildbereich wird daher vorzugsweise entlang der Drehachse oder Kipplinie in eine Mehrzahl von Teilbereichen zerlegt, für die in Schritt d) jeweils eine Gitterkonstante und eine Winkelorientierung bestimmt wird. Für die Bestimmung wird dabei ein Betrachtungsvektor verwendet, der vom jeweiligen Teilbereich zum Auge des Betrachters zeigt. Werden die Gitterparameter unter Verwendung von ortsabhängigen Beleuchtungs- und Betrachtungsvektoren bestimmt, kann diese Maßnahme entfallen, da in diesem Fall die unterschiedlichen Betrachtungswinkel durch die Ortsabhängigkeit des Beleuchtungs- und Betrachtungsvektors ohnehin berücksichtigt werden.

Ist der Betrachtungsabstand dagegen groß gegen die Ausdehnung des Gitterbildbereichs, so unterscheiden sich die lokalen Betrachtungsvektoren nur geringfügig und die Bestimmung der Gitterparameter kann für die gesamte Fläche des Gitterbildbereichs einheitlich mit einem Betrachtungsvektor erfolgen.

Die bisher beschriebenen Gitterbilder werden insbesondere mittels eines optischen oder eines Elektronenstrahl-Lithographieverfahrens einem strahlungsempfindlichen Material, insbesondere einer auf einer Substratplatte aufgebrachten Resistschicht, eingeschrieben und in diesem dabei eine Zustandsänderung herbeigeführt, vorzugsweise eine Reliefstruktur erzeugt. Nach der Herstellung der Reliefstruktur wird vorteilhaft eine Metallisierungsschicht auf das strahlungsempfindliche Material aufgebracht und eine galvanische Abformung erzeugt. Die Abformung oder eine weitere Abformung derselben wird mit Vorteil als Prägestempel zum Prägen eines Gitterbildes in ein Substrat, beispielsweise in eine Lackschicht oder eine thermoplastisch verformbare Folie, verwendet.

Neben einer metallischen, verspiegelten Gestaltung der Gitterbilder, die für eine Betrachtung im Auflicht bestimmt ist, kommt auch eine transparente Gestaltung für die Betrachtung der Gitterbilder im Durchlicht in Betracht. Anstelle kleiner Spiegelelemente, die eine gewünschte Spektralfarbe in eine gewünschte Betrachtungsrichtung reflektieren, enthält ein solches transparentes Gitterbild eine Vielzahl kleiner Prismenelemente, die eine gewünschte Spektralfarbe in eine gewünschte Betrachtungsrichtung beugen. Derartige transparente Gitterbilder können beispielsweise als Durchsichts-Sicherheitselemente in Banknoten oder anderen Wertdokumenten eingesetzt werden.

Erfindungsgemäß besonders bevorzugt ist die Herstellung der Gitterbilder mittels Elektronenstrahl-Lithographie, mit der Gitterlinien in höchster Qualität und feinsten Auflösungen bis in den Nanometerbereich erzeugt werden können. Insbesondere können die in den Druckschriften DE 102 24115 und DE 102 43 413 beschriebenen Verfahren eingesetzt werden, die insoweit in die vorliegende Anmeldung einbezogen werden.

In einer vorteilhaften Erfindungsvariante wird ein gekrümmtes Gitterbild erzeugt, indem das Gitterbild unter Berücksichtigung der sich bei der nachfolgenden Verformung ergebenden Verzerrungen einem ebenen Substrat eingeschrieben wird, und das ebene Substrat dann in die gewünschte gekrümmte Form gebracht wird. Alternativ kann ein gekrümmtes Gitterbild dadurch erzeugt erzeugen, dass ein Objekt mit der gewünschten gekrümmten Form mit dem strahlungsempfindlichen Material beschichtet wird und das Gitterbild unter Bewegung des Objekts und/oder der Lithographievorrichtung sukzessive in das strahlungsempfindliche Material eingeschrieben wird.

Die Bestimmung der Gitterparameter mit der Beziehung (L) oder (G) ermöglicht es, das Gitterbild punktrasterfrei in dem Substrat zu erzeugen, wodurch ein gegenüber herkömmlichen Punktraster-Gitterbildern deutlich erhöhtes Sicherheitsniveau erzielt werden kann.

Das erfindungsgemäße Verfahren eignet sich besonders für die automatische Erzeugung von Gitterbildern mit einem Computer. Dabei werden Form und/oder Umriss der Bildbereiche der verschiedenen Bilder sowie die Angaben zu den Beleuchtungs- und Betrachtungsbedingungen in ein Computerprogramm eingegeben, das unter Verwendung der Beziehung (L) oder (G) die Gitterparameter für die zugeordneten Gitterbereiche berechnet. Der Computer kann darüber hinaus die zum Schreiben der Gittermuster erforderlichen Gitterkoordinaten an eine Schreibvorrichtung zur Belichtung des strahlungsempfindlichen Materials, insbesondere an eine Elektronenstrahl-Lithographievorrichtung, ausgeben.

Vorteilhaft werden die Echtfarbgebiete zu mehr als 90% und insbesondere zu mehr als 95% oder sogar zu mehr als 98% aus zwei Spektralfarbbereichen gebildet. Die Echtfarbgebiete im verbleibenden Teil werden zumindest teilweise aus einem Spektralfarbbereich und/oder aus drei Spektralfarbbereichen gebildet.

Die Erfindung umfasst auch einen Gegenstand mit einem nach dem beschriebenen Verfahren erzeugten Gitterbild. In einer bevorzugten Ausgestaltung stellt der Gegenstand ein Sicherheitselement zum Aufbringen auf einen Datenträger, insbesondere einen Sicherheitsfaden, ein Etikett oder ein Transferelement, dar. Es ist ebenfalls bevorzugt, wenn der Gegenstand ein Datenträger, insbesondere eine Banknote, ein Wertdokument, ein Pass, eine Ausweiskarte oder eine Urkunde, ist. Der Gegenstand kann insbesondere im Bereich des Gitterbilds gekrümmt, etwa zylindrisch gekrümmt sein.

Weitere Ausführungsbeispiele sowie Vorteile der Erfindung werden nach folgend anhand der Figuren erläutert. Zur besseren Anschaulichkeit wird in den Figuren auf eine maßstabs- und proportionsgetreue Darstellung verzichtet. Wenn nicht ausdrücklich anders angegeben, stellen die Schraffuren der Figuren nicht die Lage oder Orientierung von Gittermustern dar, sondern dienen lediglich der Unterscheidung der verschiedenen Gitterbildbereiche.

Es zeigen:

Fig.1 eine schematische Darstellung einer Banknote mit einem Gitterbild nach einem Ausführungsbeispiel der Erfindung,

Fig. 2 einen Ausschnitt aus dem Gitterbild der Fig. 1, das schematisch ein einzelnes Echtfarbgebiet innerhalb des Gitterbilds darstellt,

Fig. 3 in (a) bis (d) verschiedene Möglichkeiten, ein Echtfarbgebiet mit Gittermustern zu belegen, wobei in (a) und (b) die Spektralfarbbereiche nebeneinander angeordnet sind, während sie in (c) und (d) überlappen,

Fig. 4 in (a) und (c) vollständig mit Komplementärfarben gefüllte Echtfarbgebiete zur Vornahme eines Weißabgleichs, und in (b) und (d) typische Echtfarbgebiete nach Durchführung des Weißabgleichs,

Fig. 5    eine CIE-xy-Farbtafel, in die zur Illustration der Bestimmung der beiden Spektralfarben $S_1$ und $S_2$ der Farbort A einer Echtfarbe eingezeichnet ist,

Fig. 6    ein Echtfarbgebiet, dessen Gittermuster durch additive Farbmischung den Buntton, die Sättigung und die Helligkeit der Echtfarbe A der Fig. 5 erzeugen,

Fig. 7    eine weitere CIE-xy-Farbtafel zur Illustration der Erzeugung farbkonstanter Graustufen-Gitterbilder,

Fig. 8    in (a) ein vereinfacht dargestelltes Gitterbild mit drei Gitterbildbereichen, das unter bestimmten Beleuchtungs- und Betrachtungsrichtungen das vorgegebene Echtfarbenbild aus (b) zeigt,

Fig. 9    die geometrischen Verhältnisse bei der Betrachtung eines Gitterbilds zur Definition der auftretenden Größen, und

Fig. 10    eine Gitterbild mit metameren Echtfarbenbereichen nach einem weiteren Ausführungsbeispiel der Erfindung.

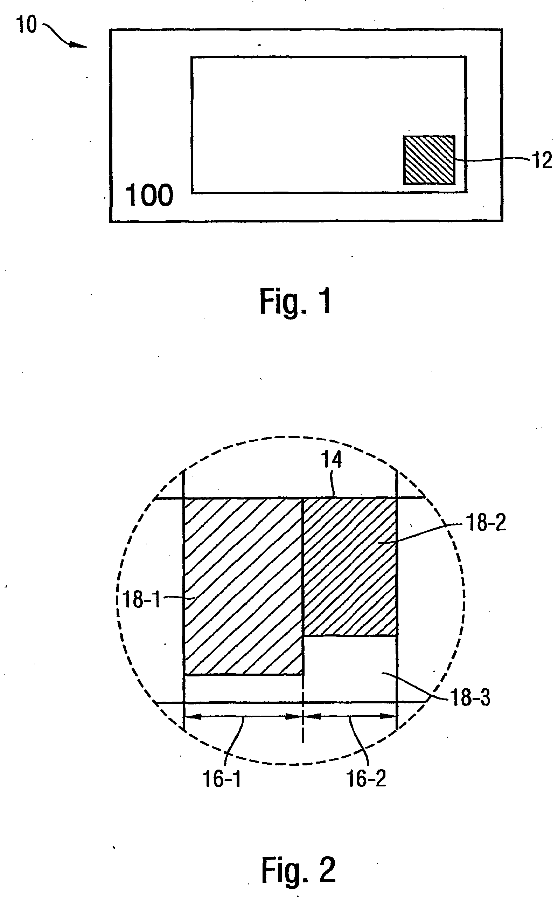

Die Erfindung wird nun am Beispiel einer Banknote erläutert. Fig. 1 zeigt eine schematische Darstellung einer Banknote 10, die auf ihrer Vorderseite mit einem erfindungsgemäßen Gitterbild 12 versehen ist. Im Ausführungsbeispiel wurde das Gitterbild 12 dazu auf einem Transferelement erzeugt, welches auf das Banknotensubstrat aufgeklebt ist.

Die Erfindung ist natürlich nicht auf Transferelemente und Banknoten beschränkt. Sie kann überall eingesetzt werden, wo Gitterbilder, insbesondere Echtfarben-Gitterbilder, zur Anwendung kommen können, beispielsweise bei Uhrenzifferblättern und Modeschmuck, bei Etiketten auf Waren und Verpackungen, bei Sicherheitselemente auf Dokumenten, Ausweisen, Pässen, Kreditkarten, Gesundheitskarten usw. Bei Banknoten und ähnlichen Dokumenten kommen beispielsweise außer Transferelementen auch Sicherheitsfäden und außer Aufsichtselementen auch Durchsichtselemente, wie Durchsichtsfenster, zur Ausstattung mit Gitterbildern infrage. Dies ist in der ebenfalls anhängigen Anmeldung PCT/EP 2004/11497 ausführlich beschrieben, deren Offenbarung insoweit in die vorliegende Anmeldung aufgenommen wird.

Bei Beleuchtung zeigt das Gitterbild 12 ein Echtfarbenbild, das nicht nur reine Spektralfarben, sondern in der Natur vorkommende Mischfarben, die im Rahmen dieser Beschreibung "Echtfarben" genannt werden, enthält. Wie am besten in dem Detailausschnitt der Fig. 2 zu erkennen, weist das Gitterbild 12 dazu eine Mehrzahl von Echtfarbgebieten 14 auf, die jeweils in einer gewünschten Betrachtungsrichtung in einer gewünschten Echtfarbe leuchten.

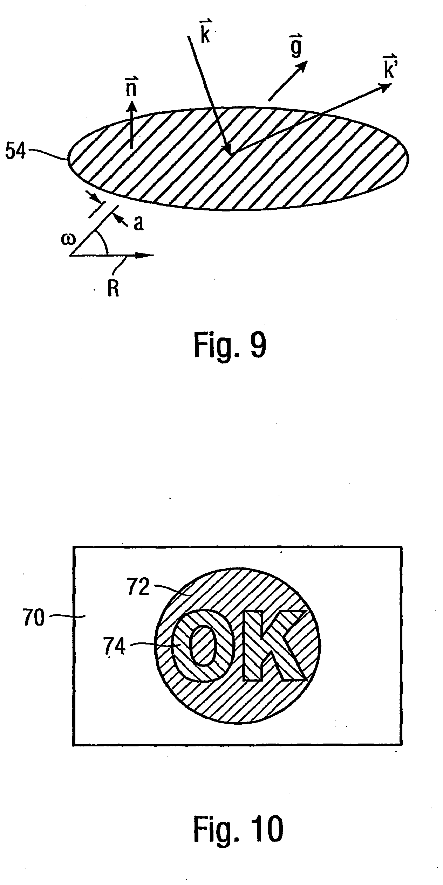

Die Echtfarbgebiete 14 können beliebige, auch unregelmäßige Gestalt haben. Der einfachen Darstellung halber werden sie in den Figuren, wie beispielsweise in Fig. 2, durch kleine Rechtecke repräsentiert, aus denen das gesamte Echtfarbbild zusammengesetzt ist. Erfindungsgemäß bestehen die Echtfarbgebiete 14 jeweils aus zwei Spektralfarbbereichen 16-1 und 16-2, deren Ausdehnung zumindest in einer Dimension unterhalb der Auflösungsgrenze des Auges liegt. Die Spektralfarbbereiche 16-1 und 16-2 enthalten jeweils ein Gittermuster 18-1 bzw. 18-2 aus parallelen Gitterlinien, das durch zwei Gitterparameter charakterisiert ist, nämlich den Abstand a der Gitterlinien, der als Gitterkonstante bezeichnet wird, und den Azimutwinkel $\omega$, den die Gitterlinien mit einer Referenzrichtung R einschließen (siehe Fig. 9). Die Gitterkonstante bestimmt dabei die Spektralfarbe, in der jeder der Spektralfarbbereiche 16-1 und 16-2 leuchtet, während der Azimutwinkel für die Sichtbarkeit der Spektralfarbbereiche aus bestimmten Betrachtungsrichtungen verantwortlich ist.

Aufgrund der kleinen Abmessungen der Spektralfarbbereiche 16-1 und 16-2 in zumindest einer Raumdimension erzeugen sie im Auge des Betrachters keine getrennten Farbreize, vielmehr erscheint das Echtfarbgebiet 14 dem Betrachter in einer einheitlichen Mischfarbe, die durch eine additive Farbmischung der Spektralfarben der beiden Spektralfarbbereiche gegeben ist.

Um nun aus einem vorgegebenen Echtfarbbild die Gitterparameter der Gittermuster 18-1 und 18-2 für jedes der einzelnen Echtfarbgebiete 14 zu erhalten, kann beispielsweise wie folgt vorgegangen werden.

Zunächst werden für das Gitterbild, abhängig von der beabsichtigten Anwendung, beispielsweise dem intendierten Betrachtungsabstand, ausreichend kleine Echtfarbgebiete mit jeweils in sich einheitlicher Echtfarbe festgelegt. Für die Echtfarbe eines Echtfarbgebiets werden dann jeweils zwei Spektralfarben und ein Anteilsverhältnis bestimmt, so dass die Spektralfarben bei anteiliger Mischung durch additive Farbmischung den Buntton und die Sättigung (also die Farbart) der Echtfarbe des Echtfarbgebiets erzeugen. Die Bestimmung der beiden Spektralfarben kann, abhängig von der Art, in der die Echtfarben gegeben sind, auf verschiedenen Wegen erfolgen. Konkrete Beispiele sind weiter unten im Detail angegeben.

Die Spektralfarbbereiche 16-1 und 16-2 werden dann beispielsweise in einem dem Anteilsverhältnis entsprechenden Flächenverhältnis jeweils mit einem diesen Spektralfarben entsprechenden Gittermuster 18-1 bzw.18-2 versehen. Bei diesem Ansatz werden Gittermuster mit im Wesentlichen gleicher Effektivität erzeugt, so dass die relative Helligkeit der Spektralfarbbereiche durch das Flächenverhältnis der Gittermusterbereiche gegeben ist.

Um nun die absolute Größe der mit den Gittermustern 18-1 bzw. 18-2 versehen Bereiche zu bestimmen, wird neben den Spektralfarben ein Helligkeitswert für die Echtfarbe eines Echtfarbgebiets bestimmt. Die beiden Spektralfarbbereiche 16-1 und 16-2 des Echtfarbgebiets werden dann mit dem jeweiligen Gittermuster 18-1 bzw.18-2 gefüllt. Der Bereich 18-3 bleibt unbelegt. Durch den unbelegten Flächenanteil ist sichergestellt, dass auch die Helligkeit der RGB-Echtfarben korrekt dargestellt wird.

**Beispiel 1**:

Sind die Echtfarben beispielsweise im RGB-System gegeben, so können die beiden Spektralfarben der Spektralfarbbereiche 16-1 und 16-2 erfindungsgemäß wie folgt bestimmt werden:

Als Grundfarben des RGB-Systems werden nachfolgend Rot mit einer Wellenlänge $\lambda_{Rot}$ von 605 nm, Grün mit einer Wellenlänge $\lambda_{Grün}$ von 540 nm und Blau mit einer Wellenlänge $\lambda_{Blau}$ von 450 nm verwendet. Die Echtfarben der Echtfarbgebiete 14 lassen sich dann als Zahlentripel (R; G; B) mit $0 \leq R \leq 1$, $0 \leq G \leq 1$ und $0 \leq B \leq 1$ darstellen.

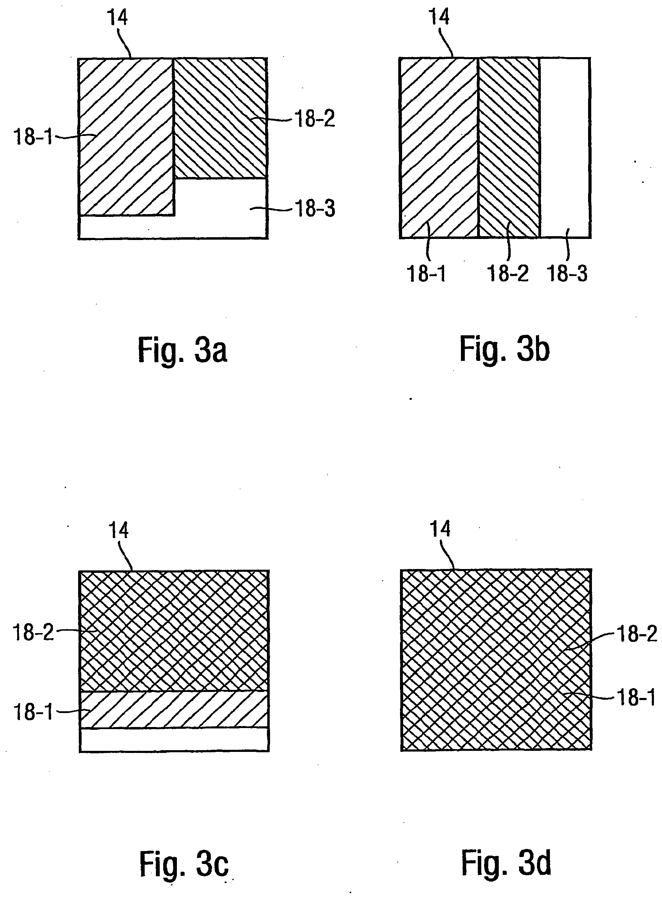

Nachfolgend wird, zunächst mit Bezug auf die Fig. 2 und 3(a), (b) ein konkretes Verfahren zur Bestimmung derjenigen Spektralfarben und ihrer Mischungsanteile beschrieben, die eine vorgegebene Farbe erzeugen.

Im XYZ-System sind jeder Farbe F drei Normfarbwerte X, Y, Z zugeordnet. Insbesondere sind für Wellenlängen im Bereich 380 nm$\leq\lambda\leq$ 780 nm den zugehörigen Spektralfarben jeweils drei Normfarbwerte $X(\lambda)$, $Y(\lambda)$, $Z(\lambda)$ zugeordnet. Zur Abkürzung wird $S(\lambda) = (X(\lambda), Y(\lambda), Z(\lambda))$ gesetzt. Wie üblich, werden einer Farbe (X, Y, Z) die Normfarbwertanteile x und y zugeordnet, die durch

$$(x,y) = p(X, Y, Z) = (\frac{X}{X+Y+Z}, \frac{Y}{X+Y+Z})$$

definiert sind.

Die Helligkeit einer Farbe F = (R, G, B) im RGB-System kann beispielsweise als H(F) = Max(R, G, B) definiert werden. Im Stand der Technik gibt es auch andere Definitionen für die Helligkeit, die hier alternativ angewandt werden können, beispielsweise die Definition H(F) = (R + G + B) /3.

Ferner soll A die Umrechnungsmatrix zwischen RGB-Farbkoordinaten und XYZ-Farbkoordinaten darstellen, so dass

$$\begin{pmatrix} X \\ Y \\ Z \end{pmatrix} = A \cdot \begin{pmatrix} R \\ G \\ B \end{pmatrix}$$

gilt. Die Umrechnungsmatrix A kann beispielsweise für einen Normbildschirm die Gestalt

$$A = \begin{pmatrix} 0.61 & 0.17 & 0.20 \\ 0.30 & 0.59 & 0.11 \\ 0.00 & 0.07 & 1.12 \end{pmatrix}$$

annehmen.

**1.1**: Mit diesen Vorbemerkungen kann nun für eine gegebene Farbe F = (R, G, B) und für eine gegebene Wellenlänge $\lambda_1$ eine weitere Wellenlänge $\lambda_2$ und Konstanten $c_1$ und $c_2$ bestimmt werden, so dass F als Mischung der zu $\lambda_1$ und $\lambda_2$ gehörenden Spektralfarben $S_1$ und $S_2$ mit den Anteilen $c_1$ und $c_2$ dargestellt wird.

Dazu werden zunächst

$$\begin{pmatrix} X \\ Y \\ Z \end{pmatrix} = A \cdot \begin{pmatrix} R \\ G \\ B \end{pmatrix}$$

und (x, y) = p(X, Y, Z) berechnet und mit diesen Werten die Lösungen t, $\lambda_2$ der Vektorgleichung

$$(x, y) = (1-t) \times p(S(\lambda_1)) + t \times p(S(\lambda_2)) \qquad (V1)$$

bestimmt. Die Lösung ist wohldefiniert, da die Vektorgleichung (V1) in Komponentenschreibweise zwei Gleichungen für die beiden gesuchten Unabhängigen $t$, $\lambda_2$ liefert. Da eine geschlossene Lösungsformel nicht existiert, wird die Lösung zweckmäßig graphisch oder numerisch mithilfe eines Computers bestimmt.

Um neben der gesuchten Wellenlänge $\lambda_2$ noch die Anteile $c_1$ und $c_2$ zu erhalten, wird die Hilfsgröße $c$ berechnet, die durch

$$c = \frac{t\,\Sigma_1}{t\,\Sigma_1 + (1-t)\,\Sigma_2}$$

mit $\Sigma_i$ der Summe der XYZ-Koordinaten von $S(\lambda_i)$ für i=1 und 2 gegeben ist. Mit dieser Hilfsgröße ergeben sich die gesuchten Anteile zu

$$c_1 = H(F) \times (1-c),$$

und

$$c_2 = H(F) \times c.$$

Mit den so ermittelten Werten für $\lambda_2$, $c_1$ und $c_2$ ergibt die Mischung der zugehörigen Spektralfarben den gewünschten Farbton in der richtigen Helligkeit, das heißt

$$(x, y) = p(c_1\,S(\lambda_1) + c_2\,S(\lambda_2)),$$

und

$$H(F) = c_1 + c_2.$$

Ist beispielsweise die Farbe F mit (R, G, B) = (0.7, 0.5, 0.2) und als Wellenlänge der ersten Spektralfarbe $\lambda_1$= 470 nm gegeben, so erhält man durch Multiplikation der RGB-Koordinaten mit der Umrechnungsmatrix A die Farbkoordinaten der Farbe F im XYZ-System

$$(X, Y, Z) = (0.55, 0.53, 0.26).$$

Daraus ergeben sich die Normfarbwertanteile und die Helligkeit zu

$$p(F) = (x, y) = (0.41, 0.39),$$

und

$$H(F) = Max(0.7, 0.5, 0.2) = 0.7.$$

Durch eine numerische Lösung der Vektorgleichung (V1) erhält man die Werte $\lambda_2$ = 575.3 nm und t = 0.75. Durch Interpolation der tabellierten $S(\lambda)$-Werte können $S(\lambda_1)$ und $S(\lambda_2)$, sowie die zugehörigen Summen $\Sigma_1$ und $\Sigma_2$ und somit auch die Hilfsgröße $c$ berechnet werden. Insgesamt ergibt sich

$$c_1 = H(F) \times (1-c) = 0.187$$

und

$$c_2 = H(F) \times c = 0.513,$$

so dass sich die gegebene Farbe F als Mischung der Spektralfarben $S_1$ mit $\lambda_1 = 470$ nm und $S_2$ mit $\lambda_2 = 575.3$ nm in den Mischungsanteilen $c_1 = 18{,}7$ % und $c_2 = 51{,}3$ % darstellen lässt.

Der erste Spektralfarbbereich 16-1 wird also mit einem Gittermuster 18-1 versehen, das bei Beleuchtung mit $\lambda_1 = 470$ nm aufleuchtet und der zweite Spektralfarbbereich 16-2 wird mit einem Gittermuster 18-2 versehen, das bei Beleuchtung mit $\lambda_2 = 575$ nm aufleuchtet.

Der Füllgrad, also der Anteil mit dem Gittermuster 18-1 bzw.18-2 gefüllten Fläche des Spektralfarbbereichs 16-1 bzw.16-2 ist dabei durch

$c_1 = 18{,}7$ % für $\lambda 1$

$c_2 = 51{,}3$ % für $\lambda_2$

gegeben. Der Rest, also der Anteil $1-c_1-c_2 = 30$% bleibt unbelegt.

Fig. 3(c) und (d) zeigen Ausführungsbeispiele; in denen die beiden Spektralfarbbereiche 16-1 und 16-2 einander vollständig überlappen und jeweils das gesamte Echtfarbgebiet 14 ausfüllen. Dabei ist im Ausführungsbeispiel der Fig. 3(c), wie im oben beschriebenen Fall nebeneinander liegender Spektralbereiche, die relative Helligkeit durch das Flächenverhältnis der Gittermusterbereiche 18-1 und 18-2 bestimmt. Durch die Überlappung der Spektralbereiche 16-1 und 16-2 kann das Echtfarbgebiet 14 zwar einerseits kleiner ausgebildet werden, andererseits ergeben sich auch unerwünschte Nebeneffekte, die durch Nebengitter mit der Summe und der Differenz der Gitterkonstanten der beiden überlagerten Gittermuster erzeugt werden.

Bei dem Ausführungsbeispiel der Fig. 3(d) füllen nicht nur die beiden Spektralbereiche 16-1 und 16-2, sondern auch die Gittermusterbereiche 18-1 und 18-2 jeweils das gesamte Echtfarbgebiet 14 aus. Diese Gestaltung erlaubt es, sehr kleine Echtfarbgebiete 14 vorzusehen. In diesem Fall wird nicht die Fläche der Gittermusterbereiche, sondern deren Effektivität, also der Anteil der zurückgeworfenen Strahlung in der gewünschten Farbe, zur Einstellung der relativen Helligkeit verwendet. Die Effektivität kann beispielsweise durch die Tiefe der Gittermusterreliefe beeinflusst werden. Tief geschnittene Gittermusterbereiche führen zu einer hohen Leuchtstärke, flache Gittermusterbereiche nur zu einer geringen Leuchtstärke.

Es versteht sich, dass auch Mischgestaltungen möglich sind, bei denen die Helligkeit der Gittermusterbereiche sowohl über den Flächenanteil als auch über die Effektivität eingestellt wird. Aufgrund der einfacheren Berechnung wird gegenwärtig die zunächst geschilderte Variante bevorzugt, bei der die Helligkeit ausschließlich über die Flächenanteile der Gittermusterbereiche 18-1 und 18-2 eingestellt wird und die Spektralfarbbereich 16-1 und 16-2 zudem nebeneinander angeordnet sind. Die nachfolgenden Ausführungsbeispiele beziehen sich daher stets auf diese Variante.

Bisher wurde zumeist unterstellt, dass die beiden Spektralbereiche 16-1 und 16-2 gleich groß sind. Durch Änderung des Größenverhältnisses der beiden Spektralbereiche kann, falls gewünscht oder erforderlich, auch ein Weißabgleich vorgenommen werden, der beispielsweise der Farbtemperatur der Beleuchtungsquelle Rechnung trägt.

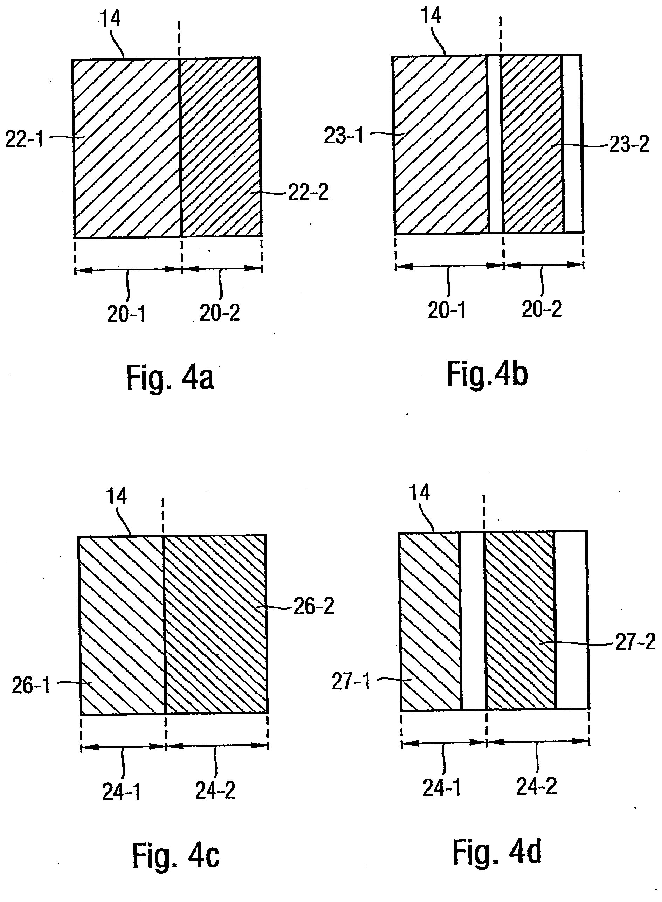

Mit Bezug auf die Darstellung der Fig. 4 kann der Weißabgleich dadurch erfolgen, dass der erste Spektralbereich 20-1 vollständig, also mit Füllgrad F(478) =1, mit einem blau bei $\lambda = 478$ nm leuchtenden Gittermuster 22-1 gefüllt wird. Der zweite Spektralbereich 20-2 wird vollständig mit einem der Komplementärfarbe zu Blau, nämlich Gelb mit $\lambda = 580$ nm, entsprechenden Gittermuster 22-2 gefüllt, wie in Fig. 4(a) dargestellt. Das Größenverhältnis der beiden Spektralbereiche 20-1 und 20-2, das im Ausführungsbeispiel durch die Breite der Spektralbereiche gegeben ist, wird dabei so eingestellt, dass sich unter den gewünschten Beleuchtungsbedingungen gerade reines Weiß als Mischfarbe ergibt. Dieses Größenverhältnis wird dann, wie in Fig. 4(b) gezeigt, für alle Farbbereiche 14 verwendet, bei denen der erste Spektralbereich 20-1 mit einem gewissen Füllgrad mit einem Gittermuster 23-1 aus dem Bereich 440 nm bis 515 nm und der zweite Spektralbereich 20-2 mit einem gewissen Füllgrad mit einem Gittermuster 23-2 der Spektralfarbe aus dem Bereich 515 nm bis 630 nm gefüllt wird.

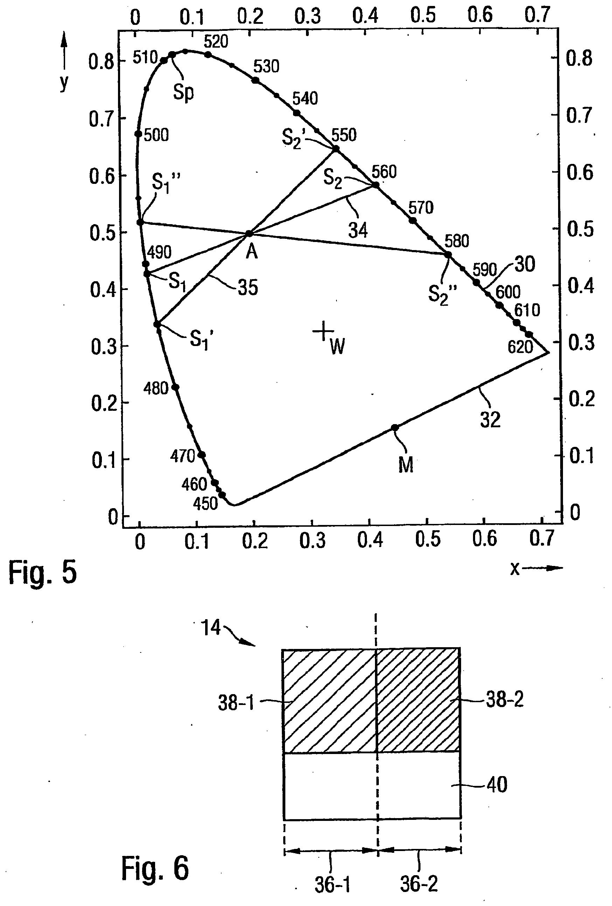

Falls in einem Echtfarbenbild Farben vorkommen, die auf dem Spektralfarbenzug 30 (Fig. 5) liegen, werden diese durch eine einzige Gittersorte dargestellt. Das ergibt sich aus obigen Gleichungen, da dann entweder $c_1$ oder $c_2$ zu Null wird.

Vorteilhaft ist es auch in solchen Fällen, in denen eine Farbe nahe dem Spektralfarbenzug liegt, die Mischfarbe durch eine nahe gelegene Spektralfarbe zu ersetzen. Dies erhöht die Brillanz und vereinfacht die Bildstruktur. In den obigen Formeln bedeutet das, dass falls $c_1$ sehr klein gegen $c_2$ ist oder umgekehrt, der Mischungspartner mit dem kleineren c weggelassen werden kann.

**Beispiel 2**: Echtfarben im CIE-Normvalenzsystem

Sind die Echtfarben als Normfarbwertanteile (x,y) im CIE-Normvalenzsystem gegeben, kann man die Spektralfarben für die beiden Spektralfarbbereiche 16-1 und 16-2 wie folgt ermitteln.

Fig. 5 zeigt zur Illustration die CIE-xy-Farbtafel. Der Spektralfarbenzug 30, auf dem Spektralfarben liegen, schließt alle für das menschliche Auge wahrnehmbaren Farbarten, gegeben jeweils durch Buntton und Sättigung, für eine bestimmte Helligkeit ein. Die Farben auf dem Spektralfarbenzug 30 weisen maximale Sättigung auf, am Unbuntpunkt oder Weißpunkt W mit (x=1/3; y=1/3) sind sie vollständig entsättigt. Geschlossen wird der Spektralfarbenzug 30 durch die Purpurgerade 32. Für das Folgende wird insbesondere die Tatsache ausgenutzt, dass der Farbort einer aus zwei Farben additiv gemischten Farbe auf der Verbindungsstrecke der Einzelfarborte liegt. Die Position der Mischfarbe auf der Verbindungsstrecke ist dabei näherungsweise durch das anteilige Verhältnis der beiden Ausgangsfarben gegeben. Eine exaktere Berechnung ist weiter unten ebenfalls angegeben.

Als Beispiel ist in Fig. 5 der Farbort einer ein entsättigtes Grün darstellenden Echtfarbe A eingezeichnet, der durch die Koordinaten (x=0,2; y=0,5) gegeben ist. Die Schnittpunkte einer Geraden 34 durch den Farbort der Echtfarbe A mit dem Spektralfarbenzug 30 der Farbtafel führen zu zwei Spektralfarben, deren additive Farbmischung die gewünschte Echtfarbe A ergibt. Beispielsweise schneidet die Gerade 34 den Spektralfarbenzug 30 bei der Spektralfarbe $S_1$ (die $\lambda$ = 489 nm entspricht) und der Spektralfarbe $S_2$ (die $\lambda$ = 560 nm entspricht). Mehrere solcher Geraden mit unterschiedlichen Schnittpunkten sind in Fig. 5 eingezeichnet, wobei aus den unten erläuterten Gründen vorzugsweise die durch die Gerade 34 bestimmten Schnittpunkte $S_1$ und $S_2$ ausgewählt werden.

Das Anteilsverhältnis der beiden Spektralfarben wird genauso bestimmt, wie im Beispiel 1 beschrieben, nur dass die Umrechnung aus dem RGB-System entfällt. Man hat ja im CIE System die X, Y, Z-Werte bzw. die x,y-Werte schon gegeben. Für das Beispiel in Fig. 5 betreffend die Spektralfarbenmischung von $S_1$ mit $\lambda_1$ = 489 nm und $S_2$ mit $\lambda_2$ = 560 nm, so dass sich der Farbton A mit (x,y) = (0,2; 0,5) mit der Helligkeit 0,8 ergibt, berechnet man als Anteilsverhältnisse $c_1$ = 0,23 und $c_2$ = 0,57. Wie in Fig. 6 gezeigt, werden die Spektralfarbbereiche 36-1 und 36-2 entsprechend mit Gittermustern 38-1 bzw. 38-2 belegt, ein Anteil $1-c_1-c_2$ (Bereich 40) bleibt unbelegt.

Werden die Spektralfarbbereiche 36-1 und 36-2 vollständig (Füllgrad =1) mit Gittermustern gefüllt, die den Spektralfarben $S_1$ und $S_2$ entsprechen, so wird für den Betrachter die Farbart der Echtfarbe A in maximal möglicher Helligkeit erzeugt. Um die Helligkeit zu reduzieren und die Echtfarbe A einschließlich ihrer Helligkeit darzustellen, werden die Spektralfarbbereiche 36-1 und 36-2 mit einem Füllgrad kleiner als 1 mit Gittermustern gefüllt. Beispielsweise soll die Echtfarbe A im Ausführungsbeispiel nur 80% der Maximalhelligkeit für diese Farbart aufweisen, so dass nur 80% der Fläche der Spektralfarbbereiche 36-1 und 36-2 mit Gittermustern 38-1 bzw. 38-2 belegt werden. Die verbleibenden Flächenanteile 40, die 20% der Gesamtfläche des Echtfarbbereichs 14 ausmachen, bleiben unbelegt.

Wie aus Fig. 5 ersichtlich, kann eine Vielzahl von Geraden durch den Farbort A der Echtfarbe gelegt werden, die jeweils zwei Schnittpunkte mit dem Spektralfarbenzug 30 aufweisen. All diese Geraden können zur Bestimmung der beiden Spektralfarben verwendet werden. Besonders vorteilhaft wird die Gerade allerdings so gewählt, dass sie in etwa parallel zur Purpurgeraden 32 verläuft, wie in Fig. 5 für die Gerade 34 und die Schnittpunkte $S_1$ und $S_2$ der Fall. In einer weiteren Formulierung wird die Spitze Sp des Spektralfarbenzugs 30 mit dem Mittelpunkt M auf der Purpurgeraden 32 verbunden, und die Gerade durch den Farbort A im Wesentlichen senkrecht auf dieser Verbindungslinie gewählt. Auch dieses Kriterium trifft für die gewählte Gerade 34 zu.

Durch eine dieser Maßnahmen bleibt der Farbeindruck des Echtfarbgebiets 14 nämlich bei kleinen Abweichungen in den Betrachtungsbedingungen näherungsweise konstant. Kippt der Betrachter das Gitterbild 12 beispielsweise aus der idealen Lage vorwärts, so verschiebt sich der Farbeindruck der beiden Spektralfarbbereiche 36-1 und 36-2 in Richtung kürzerer Wellenlängen. Der Farbort der wahrgenommenen Farbe des ersten Spektralfarbbereichs 36-1 wandert somit in Richtung auf den Schnittpunkt $S_1'$ (Fig. 5), der entsprechende Farbort für den zweiten Spektralfarbbereich 36-2 in Richtung auf den Schnittpunkt $S_2'$. Wie unmittelbar aus der Farbtafel ersichtlich, ergibt die veränderte Farbmischung der neuen Spektralfarben immer noch die im Wesentlichen die Echtfarbe A.

Kippt der Betrachter andererseits das Gitterbild 12 rückwärts, so dass sich der Farbeindruck der beiden Spektralfarbbereiche 36-1 und 36-2 in Richtung längerer Wellenlängen verschiebt, so wandert der Farbort der wahrgenommenen Farbe des ersten Spektralfarbbereichs 36-1 in Richtung auf den Schnittpunkt $S_1''$ und der entsprechende Farbort für den zweiten Spektralfarbbereich 36-2 in Richtung auf den Schnittpunkt $S_2''$. Auch hier ergibt sich bei nicht zu großen Verkippungen im Wesentlichen die Echtfarbe A. Im Vergleich zu herkömmlichen Gitterbildern weisen die erfindungsgemäßen Gitterbilder somit eine hohe Farbstabilität auf.

Weitere besondere Effekte können durch Verwendung metamerer Farben erzielt werden. Aufgrund der Empfindlichkeitskurven der drei Farbrezeptoren des menschlichen Auges können für den Beobachter völlig gleich aussehende Farben durch sehr unterschiedliche Farbreize hervorgerufen werden. Man nennt derartige gleich aussehende, aber auf verschiedenen spektralen Strahlungsverteilungen beruhende Farben bedingt gleiche Farben oder metamere Farben.

Enthält ein Gitterbild zwei oder mehrere Flächenbereiche, die in einer beliebig gewählten, gleich aussehenden, aber anders aufgebauten (metameren) Echtfarbe A ausgeführt werden sollen, so besteht nach dem oben geschilderten Verfahren die Möglichkeit, diese Echtfarbe durch unterschiedliche Paare von Spektralfarben (beispielsweise den Paaren $(S_1, S_2)$ oder $(S_1', S_2')$ der Fig. 5) bzw. unter Verwendung der zugehörigen Wellenlängen $((\lambda_1, \lambda_2)$ oder $(\lambda_1', \lambda_2')$ etc.) darzustellen.

Als Beispiel wird der weiter oben erwähnte und in Fig. 5 dargestellte Farbort einer ein entsättigtes Grün darstellenden Echtfarbe A verwendet, der durch die Koordinaten (x=0.2, y=0.5) gegeben ist. Die Schnittpunkte einer Geraden 34 durch den Farbort der Echtfarbe A mit dem Spektralfarbenzug 30 der Farbtafel führen zu zwei Spektralfarben, deren additive Farbmischung die gewünschte Echtfarbe A ergibt. Die Gerade 34 schneidet beispielhaft den Spektralfarbenzug 30 bei der Spektralfarbe $S_1$ ( die $\lambda_1$ = 489 nm entspricht) und der Spektralfarbe $S_2$ (die $\lambda_2$= 560 nm entspricht). Die Schnittpunkte einer zweiten, von der Geraden 34 abweichenden Geraden 35 durch den Farbort der Echtfarbe A mit dem Spektralfarbenzug 30 der Farbtafel führen zu zwei weiteren Spektralfarben, deren additive Farbmischung ebenfalls die gewünschte Echtfarbe A ergibt. Diese zweite Gerade 35 schneidet beispielhaft den Spektralfarbenzug 30 bei der sich von der Spektralfarbe $S_1$ unterscheidenden Spektralfarbe $S_1'$ ( die $\lambda_1'$ = 486 nm entspricht) und der sich von der Spektralfarbe $S_2$ unterscheidenden Spektralfarbe $S_2'$ ( die $\lambda_2'$ = 550 nm entspricht). Die Anteilsverhältnisse der beiden Paare von Spektralfarben $(S_1, S_2)$ oder $(S_1', S_2')$ werden genauso bestimmt, wie im Beispiel 1 beschrieben, nur dass die Umrechnung aus dem RGB-System entfällt.

Wie in Fig. 6. gezeigt, werden die Flächenbereiche, die mit dem Spektralfarbenpaar $(S_1, S_2)$ oder $(S_1', S_2')$ belegt werden sollen, jeweils mit den für jedes Spektralfarbenpaar unterschiedlichen Spektralfarbbereichen 36-1 und 36-2 entsprechend mit Gittermustern 38-1 bzw. 38-2 belegt. Wird ein derart ausgeführtes Gitterbild vor- und rückwärts gekippt, dann erscheinen die ausgeführten Flächenbereiche im Allgemeinen in voneinander abweichenden Farben. Nur für eine vorbestimmte feste Beobachtungsrichtung, für die die Berechnung mithilfe der Gitterformel (G) durchgeführt wurde, nehmen die unterschiedlichen Flächenbereiche gleichzeitig die gleich aussehende, aber unterschiedlich aufgebaute (metamere) Echtfarbe A an.

Ein konkretes Ausführungsbeispiel, das diesen Effekt ausnutzt, ist als Beispiel 5 weiter unten mit Bezug auf Fig. 10 beschrieben.

**2.1:** Nun sollen für eine gegebene Farbe F = (R, G, B) Wellenlängen $\lambda_1$ und $\lambda_2$ und Konstanten $c_1$ und $c_2$ bestimmt werden, so dass F als Mischung der zu $\lambda_1$ und $\lambda_2$ gehörenden Spektralfarben $S_1$ und $S_2$ mit den Anteilen $c_1$ und $c_2$ dargestellt wird und darüber hinaus die Verbindungslinie $S_1S_2$ zwischen den Spektralfarben im 2-dimensionalen Farbschuh (siehe Fig. 5) parallel zur Purpurgeraden verläuft.

Wieder werden zunächst

$$\begin{pmatrix} X \\ Y \\ Z \end{pmatrix} = A \cdot \begin{pmatrix} R \\ G \\ B \end{pmatrix}$$

und (x, y) = p(X, Y, Z) berechnet. Mit diesen Werten werden dann die Lösungen $(u, \lambda)$ der Vektorgleichung

$$(x, y) + u \times (p(S(660\,\text{nm})) - p(S(400\,\text{nm}))) = p(S(\lambda)) \qquad (V2)$$

bestimmt. Dabei existieren zwei Lösungen $(u_1, \lambda_1)$ und $(u_2, \lambda_2)$ der Vektorgleichung (V2), die graphisch oder numerisch bestimmt werden können. Um neben den Wellenlängen noch die Mischungsanteile $c_1$ und $c_2$ zu erhalten, wird die Hilfsgröße c berechnet, die wie oben durch

$$c = \frac{t\,\Sigma_1}{t\,\Sigma_1 + (1-t)\,\Sigma_2}.$$

gegeben ist, wobei $t = u_1 / (u_2 - u_1)$ ist, und $\Sigma_i$ wieder die Summe der XYZ-Koordinaten von $S(\lambda_i)$ für i=1,2 darstellt. Die gesuchten Anteile, mit denen sich aus den Spektralfarben $S_1$ (mit Wellenlänge $\lambda_1$) und $S_2$ (mit Wellenlänge $\lambda_2$) die gegebene Farbe F mit dem richtigen Farbton und der richtigen Helligkeit darstellen lässt, sind dann

$$c_1 = H(F) \times (1-c),$$

und

$$c_2 = H(F) \times c.$$

Beispielsweise erhält man für die Farbe F mit (R, G, B) = (0.7,0.5,0.2) wie oben

$$(X, Y, Z) = (0.55, 0.53, 0.26),$$

$$p(F) = (x, y) = (0.41, 0.40),$$

und

$$H(F) = 0.7.$$

Als Schnittpunkte der Parallelen zur Purpurgerade durch (x,y) mit dem 2-dimensionalen Farbschuh findet man durch eine numerische Lösung der Vektorgleichung (V2) daraus $\lambda_1$= 478.4 nm und $\lambda_2$ = 584.2 nm, sowie t = 0.72. Damit erhält man für die Hilfsgröße c = 0,65 und daraus

$$c_1 = H(F) \times (1-c) = 0.244$$

und

$$c_2 = H(F) \times c = 0.456.$$

Die gegebene Farbe F lässt sich somit als Mischung der Spektralfarben $S_1$ mit $\lambda_1$= 478.4 nm und $S_2$ mit $\lambda_2$ = 584.2 nm in den Mischungsanteilen $c_1$ = 24,4 % und $c_2$ = 45,6 % darstellen, wobei die Verbindungsgerade $S_1S_2$ parallel zur Purpurgeraden der Farbtafel verläuft.

Um die Farbe (R, G, B) = (0,7; 0,5; 0,2) in einer bestimmten Richtung aufleuchten zu lassen, belegt man die Gitterbereiche 36-1 und 36-2 so, dass sie in der gewünschten Richtung die Wellenlängen 478 nm und 584 nm selektieren und dass die Gitterbereiche im Flächenverhältnis 24,4% und 45,6% mit Gittern belegt sind und 30% der Fläche unbelegt bleiben.

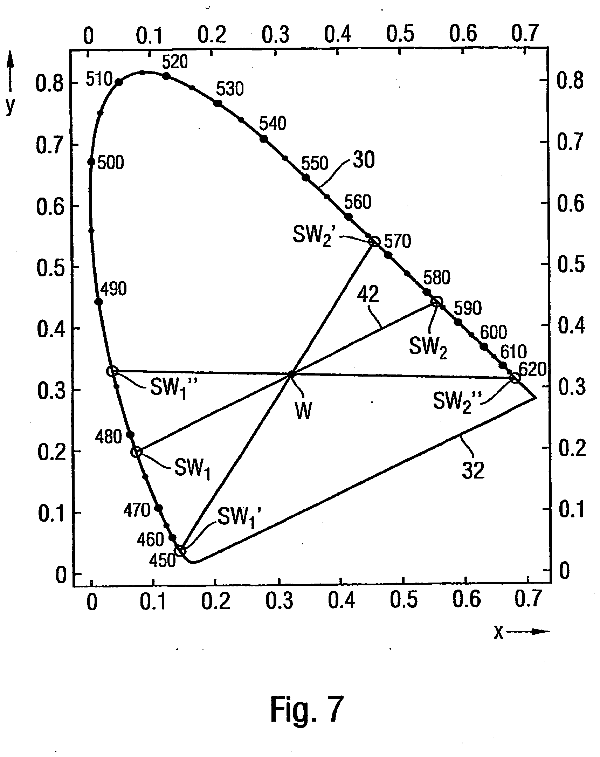

In einer besonderen Ausgestaltung eines erfindungsgemäßen Gitterbilds ist das dargestellte Echtfarbenbild ein Graustufenbild. Die Echtfarben der Echtfarbgebiete 14 sind dann alle durch den Unbuntpunkt W mit (x=1/3; y=1/3) und verschiedener Helligkeit gegeben. Mit Bezug auf Fig. 7 wird zur Erzeugung der Spektralfarbbereiche 36-1, 36-2 für ein solches Graustufenbild wie oben beschrieben vorgegangen, wobei der Unbuntpunkt W die Rolle die Echtfarbe A übernimmt. Um eine gegen Verkippen des Gitterbilds besonders stabile Farbdarstellung zu erhalten, wird zur Bestimmung der Spektralfarben die Gerade 42 gewählt, die den Spektralfarbenzug 30 in den Punkten $SW_1$ und $SW_2$ bei etwa 485 nm und etwa 585 nm schneidet.

Beim Vorwärtskippen des Gitterbilds 12, bei dem sich der Farbeindruck der beiden Spektralfarbbereiche in Richtung kürzerer Wellenlängen verschiebt, wandert der Farbort der wahrgenommenen Farbe des ersten Spektralfarbbereichs 36-1 in Richtung auf den Schnittpunkt $SW_1$' und der entsprechende Farbort fürden zweiten Spektralfarbbereich 36-2 in Richtung auf den Schnittpunkt $SW_2$'. Der gesamte Farbeindruck bleibt daher im Wesentlichen grau (unbunt), bis der Schnittpunkt $SW_1$' überschritten wird. Dann wird der Anteil des ersten Spektralfarbbereichs 36-1 unsichtbar, so dass das Gitterbild einen Gelb-Grün-Stich erhält.

Beim Rückwärtskippen des Gitterbilds 12 verschiebt sich der Farbeindruck der beiden Spektralfarbbereiche in Richtung längerer Wellenlängen, der Farbort der wahrgenommenen Farbe des ersten Spektralfarbbereichs 36-1, wandert in Richtung auf den Schnittpunkt $SW_1$" und der entsprechende Farbort für den zweiten Spektralfarbbereich 36-2 in Richtung auf den Schnittpunkt $SW_2$". Der gesamte Farbeindruck bleibt daher im Wesentlichen grau (unbunt), bis der Schnittpunkt $SW_2$" überschritten wird. Dann wird der Anteil des zweiten Spektralfarbbereichs 36-2 unsichtbar, so dass das Gitterbild einen Blau-Grün-Stich erhält.

Analog können kippstabile Echtfarbbilder in einer Sepia-Tönung oder einer anderen Farbtönung erhalten werden.

Auch bei diesem Beispiel kann ein Weißabgleich durchgeführt werden. Dazu wird beispielsweise ein Versuchsfeld für die Farbe Weiß am Rand des Gitterbilds erzeugt, und die tatsächliche Farbe des Versuchsfelds bei den gewünschten Beleuchtungsbedingungen ermittelt. Weicht die ermittelte Farbe von dem gewünschten Weißton ab, so werden die Flächenverhältnisse der Echtfarbfelder entsprechend angepasst, bis die gewünschte Übereinstimmung im Versuchsfeld erreicht ist.

**Beispiel 3**: Echtfarben in anderen Farbsystemen

Sind die Echtfarben in einem anderen Farbsystem, wie etwa dem CIELAB-System gegeben, bei denen die Mischfarben nicht auf der Verbindungslinie der Einzelfarben liegen, so können ihre Farbwerte mit den im Stand der Technik bekannten Transformationen in das RGB-System oder das CIE-Normvalenzsystem umgerechnet werden, und die unten in Beispiel 5 beschriebenen Verfahren zur Bestimmung der beiden Spektralfarben eingesetzt werden.

**Beispiel 4**: Berechnung der Gitterparameter für ebene oder gekrümmte Gitterbilder

Um auf einfache, nicht holographische Weise ein ebenes oder gekrümmtes Gitterbild zu erzeugen, das ein oder mehrere Echtfarbenbilder zeigt, können die Gitterparameter beispielsweise wie folgt berechnet werden. Dabei wird der Einfachheit halber zunächst die Berechnung für ein ebenes Gitterbild erläutert, das nur ein einziges Echtfarbenbild zeigt. Danach werden die Modifikationen angegeben, die zur Erzeugung gekrümmter Gitterbilder oder zur Darstellung mehrerer Echtfarbenbilder durch ein einziges Gitterbild notwendig sind.

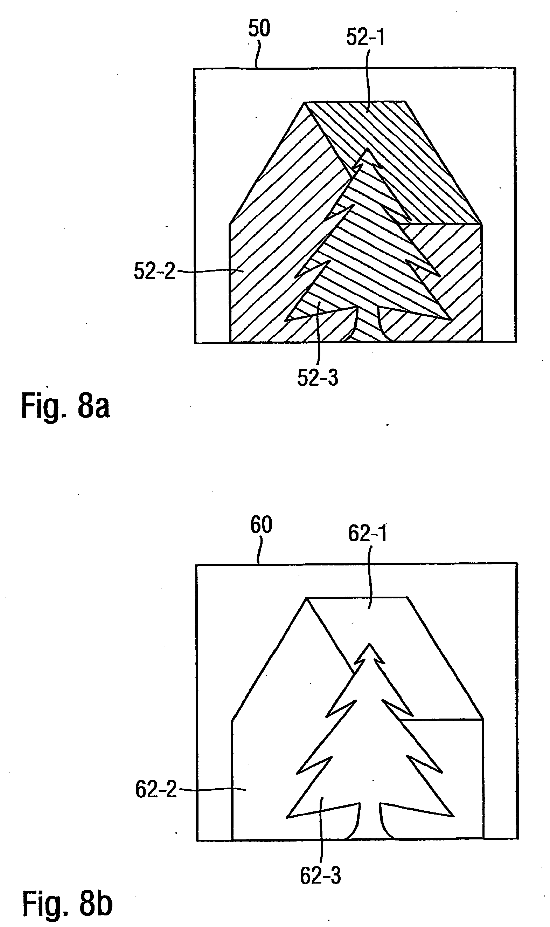

Fig. 8 zeigt in (a) eine vereinfachte Darstellung eines Gitterbildes 50, das bei Betrachtung unter bestimmten Beleuchtungs- und Betrachtungsrichtungen das in Fig. 8(b) dargestellte vorgegebene Echtfarbenbild 60 zeigt. Das vorgegebene Echtfarbenbild 60 enthält drei Bildbereiche 62-1, 62-2 und 62-3, die ein Haus mit einem Hausdach 62-1 und einer Hauswand 62-2, sowie einen Baum 62-3 darstellen. Das Gitterbild 50 weist drei den Bildbereichen 62-1 bis 62-3 zugeordnete Gitterbildbereiche 52-1 bis 52-3 auf, die jeweils mit Gittermustern aus parallelen Gitterlinien gefüllt sind.

Jedes Gittermuster ist durch zwei Gitterparameter charakterisiert, nämlich den Abstand a der Gitterlinien, der als Gitterkonstante bezeichnet wird, und den Azimutwinkel $\omega$, den die Gitterlinien mit einer Referenzrichtung R einschließen (Fig. 9). Das Gitterbild 50 ist für die Betrachtung bei Beleuchtung mit weißem Licht ausgelegt. Die geometrischen Verhältnisse bei der Betrachtung sind zur Definition der auftretenden Größen in Fig. 9 schematisch dargestellt. Jeder Spektralfarbbereich 54 enthält ein Gittermuster mit einer Gitterkonstante a und einem Azimutwinkel $\omega$. Die beiden Angaben können auch durch den Gittervektor $\vec{g}$ dargestellt werden, der einen Vektor der Länge $2\pi/a$ darstellt, der in Richtung parallel zu den Gitterlinien zeigt. Die Orientierung des Gitterbilds im Raum wird durch den Normalenvektor n angegeben, der einen Vektor der Länge 1 darstellt, der senkrecht auf der Gitterebene steht.

Das einfallende Licht wird durch einen oder mehrere Beleuchtungsvektoren $\vec{k}$ charakterisiert, die jeweils einen Vektor der Länge $2\pi/\lambda$ darstellen, der von der Lichtquelle zum Gitterbild zeigt. $\lambda$ ist dabei die Wellenlänge des Lichts, so dass monochromatisches Licht durch Beleuchtungsvektoren gleicher Länge und weißes Licht durch Beleuchtungsvektoren unterschiedlicher Länge charakterisiert ist. Der Betrachtungsvektor $\vec{k}'$ ist ein Vektor der Länge $2\pi/\lambda$, der vom Gitterbild zum Auge des Betrachters zeigt.

Ein Bereich 54 wird für den Betrachter nun gerade dann sichtbar, wenn die oben angegebene Bedingung (G)

$$\vec{n} \times \left( \vec{k}' - \vec{k} \right) = m\vec{g}$$

für eine ganze Zahl m erfüllt ist, da nur dann eine konstruktive Interferenz der vom Bereich 54 reflektierten Lichtstrahlen in Betrachtungsrichtung erfolgt. Durch die Formulierung in Vektorschreibweise ist die Beziehung (G) unabhängig von der Wahl des Koordinatensystems. Beispiele für konkrete Koordinatensysteme sind in der ebenfalls abhängigen deutschen Patentanmeldung 10 2004 006 771.6 enthalten, deren Offenbarung insoweit in die vorliegende Anmeldung aufgenommen wird.

Zur Berechnung der Gitterparameter für ein Gitterbild werden zunächst die Beleuchtungs- und Betrachtungsrichtungen für das Gitterbild 50 festgelegt, bei dem das vorgegebene Echtfarbenbild 60 sichtbar sein soll.

Dann wird für jeden Bildbereich 62-1 bis 62-3 eine Echtfarbe festgelegt, in der er unter den festgelegten Beleuchtungs- und Betrachtungsverhältnissen erscheinen soll. Im Ausführungsbeispiel ist für das Hausdach 62-1 die Echtfarbe Ziegelsteinrot mit den RGB-Werten (0,70; 0,13; 0,13), für die Hauswand 62-2 die Echtfarbe Helles Beige mit den RGB-Werten (1,0; 0,97; 0,86), und für den Baum 62-3 die Echtfarbe Waldgrün mit den RGB-Werten (0,15; 0,54; 0,13) festgelegt.

Dann wird innerhalb der Gitterbildbereiche 52-1 bis 52-3 eine Mehrzahl von Echtfarbgebieten festgelegt, die

EP 1 831 736 B2

im Ausführungsbeispiel als kleine Rechteckelemente ausgebildet sind. Die Echtfarbgebiete enthalten ihrerseits jeweils zwei Spektralfarbgebiete, deren Spektralfarben durch additive Farbmischung gerade die Echtfarbe des Echtfarbgebiets erzeugt.

Anschließend werden aus den Beleuchtungs- und Betrachtungswinkeln und der jeweiligen Echtfarbe unter Verwendung der Beziehung (G) und beispielsweise der oben beschriebenen Vorgehensweise für die Darstellung von RGB-Echtfarben für jeden Spektralfarbbereich eine Gitterkonstante und eine Winkelorientierung berechnet. Die Rechnung wird vorzugsweise für die 1. Beugungsordnung durchgeführt, also m = +1 oder -1 in Beziehung (G) verwendet.

Dann wird das Gitterbild mit den Gitterbildbereichen 52-1 bis 52-3 in einem Substrat erzeugt, wobei die Form und Anordnung der Gitterbildbereiche 52-1 bis 52-3 denen der Bildbereiche 62-1 bis 62-3 entsprechen. Dabei werden die Spektralfarbbereiche der Echtfarbbereiche jeweils mit einem Gittermuster gefüllt, dessen Gitterparameter durch die für den zugeordneten Bildbereich und die Spektralfarbe bestimmte Gitterkonstante a und Winkelorientierung ω gegeben sind. Die Herstellung des Gitterbildes erfolgt beispielsweise mit einem Elektronenstrahl-Lithographieverfahren, wie es in den Druckschriften DE 102 26 115 und DE 102 43 413 beschrieben.ist.

Um mehrere Echtfarbenbilder in einem Gitterbild zu codieren und die Echtfarbenbilder bei unterschiedlichen Orientierungen des Gitterbilds am gleichen Ort erscheinen zu lassen, können für jedes der Echtfarbenbilder die Gitterparameter seiner Bildbereiche berechnet, für die den Bildbereichen zugeordneten Gitterbereiche ein entsprechendes Gittermuster vorgesehen werden. Die Gitterbereiche werden dann in schmale Streifen zerlegt und das Gesamtbild aus nebeneinander liegenden Streifen aus den verschiedenen Echtfarbenbildern zusammengesetzt. Die Streifenbreite wird dabei unterhalb der Auflösungsgrenze des Auges gewählt. Der Betrachter nimmt dann beim Bewegen des Gitterbilds beispielsweise ein Wechselbild, ein Bewegungsbild, ein Stereobild oder ein Kulissenbild wahr. Das detaillierte Vorgehen ist der ebenfalls abhängigen deutschen Patentanmeldung 10 2004 006 771.6 beschrieben, deren Offenbarung insoweit in die vorliegende Anmeldung aufgenommen wird.

Neben ebenen Gitterbildern lassen sich mit dem erfindungsgemäßen Verfahren auch gekrümmte Gitterbilder erzeugen. Bei gekrümmten Gitterbildern ist der Normalenvektor anders als bei ebenen Gitterbildern keine Konstante, sondern variiert über der Fläche des Gitterbilds. Zur Berechnung eines gekrümmten Gitterbilds wird daher jeder Gitterbildbereich in kleine Unterbereiche aufgeteilt, innerhalb derer der Normalenvektor $\vec{n}(\vec{r})$ für einen Bezugsaufpunkt P mit den Koordinaten $\vec{r} = (x_0, y_0, z_0)$ in guter Näherung als konstant aufgefasst werden kann. Die oben beschriebene Berechnung von Gitterkonstante a und Azimutwinkel ω wird dann für jeden dieser Unterbereiche unter Verwendung des lokal konstanten Normalenvektors $\vec{n}(\vec{r})$ durchgeführt.

Im allgemeinsten Fall kann bei der Berechnung weiter berücksichtigt werden, dass bei einem ausgedehnten Gitterbild und endlichem Abstand von Lichtquelle und Betrachter sowohl der Beleuchtungsvektor als auch der Betrachtungsvektor von der Position des jeweiligen Unterbereichs im Gitterbild abhängen, also durch örtlich variierende Vektoren $\vec{k}(\vec{r})$ bzw. $\vec{k}(\vec{r})$ gegeben sind. Die oben angegebene Beziehung (G) stellt sich dann in der allgemeineren lokalen Form

$$\vec{n}(\vec{r}) \times \left( \vec{k}'(\vec{r}) - \vec{k}(\vec{r}) \right) = m\vec{g} \qquad (L)$$

dar. Diese Beziehung (L) kann selbstverständlich auch für die Berechnung ebener Gitterbilder verwendet werden, wobei der Normalenvektor $\vec{n}(\vec{r})$ in diesem Fall konstant ist, und nur der Beleuchtungsvektor und der Betrachtungsvektor über der Fläche des Gitterbilds variieren.

Ist die gekrümmte Oberfläche des Gitterbilds allgemein durch eine Fläche *f(x,y,z)=0* gegeben, so lässt sich der lokale Normalenvektor $\vec{n}(\vec{r})$ schreiben als

$$\vec{n}(\vec{r}) = \begin{pmatrix} \frac{\partial f}{\partial x}(x_0, y_0, z_0) \\ \frac{\partial f}{\partial y}(x_0, y_0, z_0) \\ \frac{\partial f}{\partial z}(x_0, y_0, z_0) \end{pmatrix} / \sqrt{\frac{\partial f}{\partial x}(x_0, y_0, z_0)^2 + \frac{\partial f}{\partial y}(x_0, y_0, z_0)^2 + \frac{\partial f}{\partial z}(x_0, y_0, z_0)^2}$$

Die Berechnung mit der Beziehung (L) liefert dann fürjeden der Unterbereiche des Gitterbilds einen Gittervektor $\vec{g}$ in Form eines Zahlentripels $\vec{g} = (g_x, g_y, g_z)$. Daraus erhält man die Gitterkonstante

$$a = \frac{2\pi}{\sqrt{g_x^2 + g_y^2 + g_z^2}}$$

Die Richtung des Gittervektors ist durch den Pfeil vom Nullpunkt zu dem Punkt, der durch die Koordinaten ($g_x$, $g_y$, $g_z$) definiert ist, gegeben. Mit der Gitterkonstante a, der Richtung des Gittervektors und der Richtung des Gitternormalenvektors $n(r)$ ist das Gitter für jeden Unterbereich vollständig beschrieben.

Soll das gekrümmte Gitter in unterschiedlichen Orientierungen mehrere Bilder zeigen, beispielsweise in Form eines Wechselbilds, eines Bewegungsbilds, eines Pumpbilds, eines Stereobilds oder dergleichen, so können die oben genannten Unterbereiche in eine entsprechende Anzahl an Teilbereichen zerlegt werden. Für jeden der Teilbereiche werden die Gitterparameter für die jeweilige Betrachtungssituation, also die Orientierung des Gitterbilds, in der das jeweilige Bild sichtbar sein soll, berechnet und die Teilbereiche entsprechend den berechneten Gitterparametern mit Gittermustern belegt.

Weitere Einzelheiten zur Erzeugung gekrümmter Gitterbilder sind in der ebenfalls abhängigen deutschen Patentanmeldung 10 2004 006 771.6 beschrieben, deren Offenbarung insoweit in die vorliegende Anmeldung aufgenommen wird.

**Beispiel 5**: Gitterbild mit metameren Echtfarbbereichen

Um die Verwendung metamerer Echtfarbbereiche zu illustrieren, zeigt Fig. 10 beispielhaft ein Gitterbild 70 mit zwei direkt aneinander grenzenden Gitterbildbereichen 72 und 74. Dabei sind der Flächenbereich des Schriftzugs 74 "OK" und des diesen Schriftzug umgebenden Flächenbereichs des Kreises 72 nach dem oben beschriebenen Verfahren in einer festen Echtfarbe A ausgeführt.

Zur Realisierung dieser Echtfarbe A nach dem oben geschilderten Verfahren sind, wie Fig. 5 verdeutlicht, mehrere Paare von Spektralfarben möglich. Wählt man für den Schriftzug "OK" ein Spektralfarbenpaar ($S_1$, $S_2$) und für den umgebenden Kreis eine zweites davon sich unterscheidendes Paar ($S_1$', $S_2$'), so erscheinen die beiden Flächenbereiche 72 und 74 beim Vor- und Rückwärtskippen im Allgemeinen in leicht unterschiedlichen Echtfarben. Dieser farbliche Unterschied ist umso deutlicher, je größer der Wellenlängenunterschied zwischen den Spektralfarben $S_1$ und $S_1$' bzw. $S_2$ und $S_2$' ist.

Für eine vorbestimmte Beobachtungseinstellung liefern beide Flächenbereiche 72, 74 die gleich aussehende, aber unterschiedlich aufgebaute (metamere) Echtfarbe A. Dies bedeutet, dass ein Betrachter dann nicht zwischen dem Schriftzug "OK" und seiner Umgebung unterscheiden kann, so der Schriftzug für ihn aus dieser Beobachtungsrichtung "verschwindet".

**Patentansprüche**

1. Gitterbild zur Darstellung zumindest eines Echtfarbenbilds, das eine Mehrzahl von Echtfarbgebieten (14) aufweist, die bei Beleuchtung des Gitterbilds in einer gewünschten beliebig wählbaren Echtfarbe leuchten, **dadurch gekennzeichnet, dass** die Echtfarbgebiete zu mehr als 70% aus nur einem ersten und einem zweiten Spektralfarbbereich (16-1, 16-2) bestehen, wobei die Spektralfarbbereiche jeweils durch eine Gitterkonstante und eine Winkelorientierung definierte Gittermuster (18-1, 18-2) aus parallelen Gitterlinien enthalten, und wobei wenigstens die Gittermuster der ersten Spektralfarbbereiche für jedes Echtfarbgebiet separat festgelegt sind, sodass bei Beleuchtung der erste und zweite Spektralfarbbereich zusammen durch additive Farbmischung die Echtfarbe des Echtfarbgebiets erzeugen.

2. Gitterbild nach Anspruch 1, **dadurch gekennzeichnet, dass** die Ausdehnung der Spektralfarbbereiche zumindest in einer Dimension unterhalb der Auflösungsgrenze des Auges liegt.

3. Gitterbild nach Anspruch 1 oder 2, **dadurch gekennzeichnet, dass** die Spektralfarbbereiche als schmale Streifen mit einer Breite unterhalb der Auflösungsgrenze des Auges ausgebildet sind.

4. Gitterbild nach Anspruch 1 oder 2, **dadurch gekennzeichnet, dass** die Spektralfarbbereiche als kleine Rechteckelemente beliebiger Form mit einer Größe unterhalb der Auflösungsgrenze des Auges ausgebildet sind.

5. Gitterbild nach Anspruch 3 oder 4, **dadurch gekennzeichnet, dass** die schmalen Streifen oder kleinen Rechteckelemente parallel zu Gitterlinien des Gittermusters ausgerichtet sind.

**6.** Gitterbild nach wenigstens einem der Ansprüche 1 bis 5, **dadurch gekennzeichnet, dass** die Spektralfarbbereiche jeweils ein einer Spektralfarbe entsprechendes, bei Beleuchtung diese Spektralfarbe erzeugenden Gittermuster enthalten, wobei die Spektralfarben und das Flächenverhältnis der beiden den Spektralfarben entsprechenden Gittermuster so gewählt sind, dass die beiden Spektralfarbbereiche durch additive Farbmischung den Buntton und die Sättigung der Echtfarbe des Echtfarbgebiets erzeugen

**7.** Gitterbild nach wenigstens einem der Ansprüche 1 bis 6, **dadurch gekennzeichnet, dass** die beiden Spektralfarbbereiche eines Echtfarbgebiets in einem Flächenanteil mit dem jeweiligen Gittermuster gefüllt sind, der der Helligkeit der Echtfarbe entspricht.

**8.** Gitterbild nach Anspruch 7, **dadurch gekennzeichnet, dass** die Gittermuster der beiden Spektralfarbbereiche die jeweilige Spektralfarbe mit im Wesentlichen gleicher Effektivität aus der Beleuchtungsstrahlung erzeugen.

**9.** Gitterbild nach wenigstens einem der Ansprüche 1 bis 6, **dadurch gekennzeichnet, dass** die beiden Spektralfarbbereiche eines Echtfarbgebiets mit Gittermustern einer solchen Effektivität und eines solchen Flächenanteils gefüllt sind, dass sie bei Beleuchtung die Helligkeit der Echtfarbe reproduzieren.

**10.** Gitterbild nach wenigstens einem der Ansprüche 1 bis 9, **dadurch gekennzeichnet, dass** ein erster der Spektralfarbbereiche jeweils ein Gittermuster enthält, das einer, aus einer vorbestimmten Gruppe ausgewählten Spektralfarbe entspricht, und das Gittermuster des zweiten Spektralfarbbereichs so auf die ausgewählte Spektralfarbe des ersten Spektralfarbbereichs abgestimmt ist, dass die beiden Spektralfarben durch additive Farbmischung den Buntton und die Sättigung der Echtfarbe des Echtfarbgebiets erzeugen.

**11.** Gitterbild nach Anspruch 10, **dadurch gekennzeichnet, dass** der erste der Spektralfarbbereiche jeweils ein Gittermuster enthält, das entweder der Spektralfarbe Rot oder der Spektralfarbe Blau entspricht.

**12.** Gitterbild nach Anspruch 10 oder 11, **dadurch gekennzeichnet, dass** die Größen der beiden Spektralfarbbereiche so aufeinander und auf vorbestimmte Beleuchtungsbedingungen abgestimmt sind, dass die beiden Spektralfarbbereiche unter den vorbestimmten Beleuchtungsbedingungen bei vollständiger Füllung des ersten Spektralbereichs mit dem Gittermuster der ausgewählten Spektralfarbe und des zweiten Spektralbereichs mit einem Gittermuster, das der dazu komplementären Spektralfarbe entspricht, durch additive Farbmischung zusammen reines Weiß erzeugen.

**13.** Gitterbild nach einem der Ansprüche 1 bis 12, **dadurch gekennzeichnet, dass** zwei oder mehrere der Echtfarbgebiete metamere Farben erzeugende Gittermuster enthalten.

**14.** Gitterbild nach einem der Ansprüche 1 bis 13, **dadurch gekennzeichnet, dass** die Echtfarbgebiete zu mehr als 90% und insbesondere zu mehr als 95% aus zwei Spektralfarbbereichen bestehen.

**15.** Gitterbild nach Anspruch 1, **dadurch gekennzeichnet, dass** der verbleibende Teil der Echtfarbgebiete aus einem Spektralfarbbereich bestehende Echtfarbgebiete enthält.

**16.** Gitterbild nach Anspruch 1 oder 15, **dadurch gekennzeichnet, dass** der verbleibende Teil der Echtfarbgebiete aus drei Spektralfarbbereichen bestehende Echtfarbgebiete enthält.

**17.** Verfahren zum Erzeugen eines Gitterbilds, das zumindest ein vorgegebenen Echtfarbenbild zeigt, bei dem das Gitterbild mit einer Mehrzahl von Echtfarbgebieten erzeugt wird, die bei Beleuchtung des Gitterbilds in einer gewünschten beliebig wählbaren Echtfarbe leuchten, **dadurch gekennzeichnet, dass** die Echtfarbgebiete zu mehr als 70% aus nur einem ersten und einem zweiten Spektralfarbbereich gebildet werden, wobei die Spektralfarbbereiche jeweils mit einem durch eine Gitterkonstante und eine Winkelorientierung definierte Gittermuster aus parallelen Gitterlinien gebildet werden, und wobei wenigstens die Gittermuster der ersten Spektralfarbbereiche für jedes Echtfarbgebiet separat festgelegt werden, sodass bei Beleuchtung der erste und zweite Spektralfarbbereich zusammen durch additive Farbmischung die Echtfarbe des Echtfarbgebiets erzeugen.

**18.** Verfahren nach Anspruch 17, **dadurch gekennzeichnet, dass** die Spektralfarbbereiche mit einer Ausdehnung erzeugt werden, die zumindest in einer Dimension unterhalb der Auflösungsgrenze des Auges liegt.

**19.** Verfahren nach Anspruch 17 oder 18, **dadurch gekennzeichnet, dass** die Spektralfarbbereiche als schmale Streifen mit einer Breite unterhalb der Auflösungsgrenze des Auges ausgebildet werden.

20. Verfahren nach Anspruch 17 oder 18, **dadurch gekennzeichnet, dass** die Spektralfarbbereiche als kleine Rechteckelemente beliebiger Form mit einer Größe unterhalb der Auflösungsgrenze des Auges ausgebildet werden.

21. Verfahren nach Anspruch 19 oder 20, **dadurch gekennzeichnet, dass** die schmalen Streifen oder kleinen Rechteckelemente parallel zu Gitterlinien des Gittermusters ausgerichtet werden.

22. Verfahren nach wenigstens einem der Ansprüche 17 bis 21, **dadurch gekennzeichnet, dass** für die Echtfarbe eines Echtfarbgebiets zwei Spektralfarben und ein Anteilsverhältnis so bestimmt werden, dass die Spektralfarben bei anteiliger Mischung durch additive Farbmischung den Buntton und die Sättigung der Echtfarbe des Echtfarbgebiets erzeugen, und dass die Spektralfarbbereiche jeweils mit einem diesen Spektralfarben entsprechenden Gittermuster in einem dem Anteilsverhältnis entsprechenden Flächenverhältnis versehen werden.

23. Verfahren nach Anspruch 20, **dadurch gekennzeichnet, dass** die beiden Spektralfarben bestimmt werden, indem eine erste Spektralfarbe aus einer vorbestimmten Gruppe von Spektralfarben ausgewählt wird, und die zweite Spektralfarbe und das Anteilsverhältnis so auf die erste Spektralfarbe abgestimmt wird, dass die beiden Spektralfarben anteilig gemischt durch additive Farbmischung den Buntton und die Sättigung der Echtfarbe des Echtfarbgebiets erzeugen.

24. Verfahren nach Anspruch 23, **dadurch gekennzeichnet, dass** die erste Spektralfarbe aus der Gruppe Spektralfarbe Rot und Spektralfarbe Blau ausgewählt wird.

25. Verfahren nach einem der Ansprüche 23 oder 24, **dadurch gekennzeichnet, dass** die Größen der beiden Spektralfarbbereiche so aufeinander und auf vorbestimmte Beleuchtungsbedingungen abgestimmt werden, dass beide Spektralfarbbereiche unter den vorbestimmten Beleuchtungsbedingungen bei vollständiger Füllung des ersten Spektralbereichs mit dem Gittermuster der ausgewählten Spektralfarbe und des zweiten Spektralbereichs mit einem Gittermuster, das der dazu komplementären Spektralfarbe entspricht, durch additive Farbmischung zusammen reines Weiß erzeugen.

26. Verfahren nach Anspruch 22, **dadurch gekennzeichnet, dass** die Spektralfarben bestimmt werden, indem in einer Farbtafel der Farbort der Echtfarbe angegeben wird, die Spektralfarben durch die beiden Schnittpunkte einer Geraden durch den Farbort der Echtfarbe mit dem Spektralfarbenzug der Farbtafel bestimmt werden, und das Anteilsverhältnis aus dem Verhältnis der Farbabstände der beiden Schnittpunkte von dem Farbort der Echtfarbe bestimmt wird.

27. Verfahren nach Anspruch 26, **dadurch gekennzeichnet, dass** die Gerade durch den Farbort der Echtfarbe so gewählt wird, dass sie im Wesentlichen parallel zur Purpurgeraden der Farbtafel verläuft.

28. Verfahren nach wenigstens einem der Ansprüche 17 bis 27, **dadurch gekennzeichnet, dass** zwei oder mehrere der Echtfarbgebiete mit Gittermustern gefüllt werden, die bei Beleuchtung metamere Farben erzeugen.

29. Verfahren nach Anspruch 28, **dadurch gekennzeichnet, dass** die Spektralfarben der die metameren Farben erzeugenden Gittermuster bestimmt werden, indem in einer Farbtafel der Farbort der gewünschten Echtfarbe angegeben wird, und die Spektralfarben für Echtfarbgebiete jeweils durch die beiden Schnittpunkte verschiedener Geraden durch den Farbort der Echtfarbe mit dem Spektralfarbenzug der Farbtafel bestimmt werden.

30. Verfahren nach wenigstens einem der Ansprüche 17 bis 29, **dadurch gekennzeichnet, dass** das Echtfarbenbild ein Graustufenbild darstellt.

31. Verfahren nach wenigstens einem der Ansprüche 17 bis 30, **dadurch gekennzeichnet, dass** für die Echtfarbe eines Echtfarbgebiets ein Helligkeitswert bestimmt wird, und die beiden Spektralfarbbereiche des Echtfarbgebiets in einem Flächenanteil mit dem jeweiligen Gittermuster gefüllt werden, der der Helligkeit der Echtfarbe entspricht.

32. Verfahren nach wenigstens einem der Ansprüche 22 bis 31, **dadurch gekennzeichnet, dass**

   a) eine Orientierung für das Gitterbild im Raum festgelegt wird, in welcher das vorgegebene Echtfarbenbild sichtbar ist,

b) eine Echtfarbe für jeden Bildbereich des vorgegebenen Echtfarbenbilds festgelegt wird, in der der jeweilige Bildbereich bei der festgelegten Orientierung erscheint,

c) Gitterbildbereiche des Gitterbilds festgelegt werden, die jeweils einem Bildbereich zugeordnet sind und deren Anordnung innerhalb des Gitterbilds im Wesentlichen der Anordnung der Bildbereiche in dem vorgegebenen Bild entspricht,

d) ein oder mehrere Echtfarbgebiete als Unterbereiche innerhalb jedes Gitterbildbereichs festgelegt werden und für jeden der Spektralfarbbereiche der Unterbereiche aus der festgelegten Orientierung des Gitterbilds und der bestimmten Spektralfarbe des Spektralfarbbereichs unter Verwendung der Beziehung

$$\vec{n}(\vec{r}) \times \left( \vec{k}'(\vec{r}) - \vec{k}(\vec{r}) \right) = m\vec{g}$$

eine *Gitterkonstante und eine* Winkelorientierung bestimmt werden, wobei $\vec{r}$ einen Bezugsaufpunkt in dem Unterbereich des Gitterbilds, $\vec{n}(\vec{r})$, $\vec{k}'(\vec{r})$ und $\vec{k}(\vec{r})$ *den Normalenvektor, den* Betrachtungsvektor bzw. den Beleuchtungsvektor im Bezugsaufpunkt $\vec{r}$, m die Beugungsordnung und $\vec{g}$ den Gittervektor für den Unterbereich darstellen, und

e) ein Gitterbild mit Gitterbildbereichen in einem Substrat erzeugt wird, wobei jeder Spektralfarbbereich mit einem Gittermuster gefüllt wird, dessen Gitterkonstante und Winkelorientierung durch die in Schritt d) für diesen Spektralfarbbereich bestimmte Gitterkonstante und Winkelorientierung gegeben sind.

33. Verfahren nach Anspruch 32, **dadurch gekennzeichnet, dass** Form und Größe der Unterbereiche in Schritt d) abhängig von der Krümmung des Gitterbilds festgelegt werden.

34. Verfahren nach Anspruch 32 oder 33, **dadurch gekennzeichnet, dass** zur Bestimmung von Gitterkonstante und Winkelorientierung für jeden Unterbereich ein über die Fläche des Gitterbilds variierender Betrachtungsvektor $\vec{k}'(\vec{r})$ verwendet wird, dessen Richtung durch die Verbindungslinie zwischen dem Bezugsaufpunkt des jeweiligen Unterbereichs und einem Betrachtungspunkt gegeben ist.

35. Verfahren nach wenigstens einem der Ansprüche 32 bis 34, **dadurch gekennzeichnet, dass** zur Bestimmung von Gitterkonstante und Winkelorientierung für jeden Unterbereich ein über die Fläche des Gitterbilds variierender Beleuchtungsvektor $\vec{k}(\vec{r})$ verwendet wird, dessen Richtung durch die Verbindungslinie zwischen einem Beleuchtungspunkt und dem Bezugsaufpunkt des jeweiligen Unterbereichs gegeben ist.

36. Verfahren nach Anspruch 32 oder 33, **dadurch gekennzeichnet, dass** zur Bestimmung von Gitterkonstante und Winkelorientierung für jeden Unterbereich ein über die Fläche jedes Gitterbildbereichs oder über die gesamte Gitterbildfläche konstanter Betrachtungsvektor $\vec{k}'$ verwendet wird, dessen Richtung durch die Verbindungslinie zwischen einem für das Gitterbild repräsentativen Bezugspunkt und einem Betrachtungspunkt gegeben ist.

37. Verfahren nach wenigstens einem der Ansprüche 32, 33 oder 36, **dadurch gekennzeichnet, dass** zur Bestimmung von Gitterkonstante und Winkelorientierung für jeden Unterbereich ein über die Fläche jedes Gitterbildbereichs oder über die gesamte Gitterbildfläche konstanter Beleuchtungsvektor $\vec{k}$ verwendet wird, dessen Richtung durch die Verbindungslinie zwischen einem Beleuchtungspunkt und einem für das Gitterbild repräsentativen Bezugspunkt gegeben ist.

38. Verfahren nach wenigstens einem der Ansprüche 32 bis 37, **dadurch gekennzeichnet, dass** die Gitterbildbereiche in Schritt e) mit einer Form und einer relativen Lage erzeugt werden, die im Wesentlichen der Form und der relativen Lage der zugeordneten Bildbereiche entsprechen.

39. Verfahren nach wenigstens einem der Ansprüche 32 bis 38, **dadurch gekennzeichnet, dass** das Gitterbild in unterschiedlichen Orientierungen mehrere Bilder zeigt, wobei die Schritte a) bis d) für jedes der mehreren Bilder durchgeführt werden.

40. Verfahren nach Anspruch 39, **dadurch gekennzeichnet, dass** Gitterbildbereiche, die Bildbereichen verschiedener Bilder zugeordnet sind, einander zumindest teilweise überlappen, insbesondere ineinander verschachtelt werden, wobei die überlappenden Gitterbildbereiche bevorzugt in schmale Streifen zerlegt werden und die schmalen Streifen der Gitterbildbereiche alternierend nebeneinander angeordnet werden.

41. Verfahren nach Anspruch 40, **dadurch gekennzeichnet, dass** die Breite der schmalen Streifen unterhalb der Auflösungsgrenze des bloßen Auges gewählt wird, wobei die schmalen Streifen bevorzugt parallel zu einer Dreh- oder Kippachse des Gitterbildes ausgerichtet werden.

42. Verfahren nach Anspruch 40, **dadurch gekennzeichnet, dass** die Gitterbildbereiche, die überlappenden Bildbereichen unterschiedlicher Bilder zugeordnet sind, in beliebig geformte kleine Teilbereiche zerlegt werden und die kleinen Teilbereiche der Gitterbildbereiche ineinander verschachtelt angeordnet werden.

43. Verfahren nach Anspruch 42, **dadurch gekennzeichnet, dass** zumindest eine charakteristische Abmessung der kleinen Teilbereiche unterhalb der Auflösungsgrenze des bloßen Auges gewählt wird.

44. Verfahren nach wenigstens einem der Ansprüche 39 bis 43, **dadurch gekennzeichnet, dass** das Gitterbild in unterschiedlichen Orientierungen unterschiedliche Bilder zeigt, so dass für den Betrachter bei entsprechender Bewegung des Gitterbildes ein Wechselbild entsteht.

45. Verfahren nach wenigstens einem der Ansprüche 39 bis 43, **dadurch gekennzeichnet, dass** das Gitterbild in unterschiedlichen Orientierungen ein Bildmotiv in unterschiedlichen Bewegungszuständen zeigt, so dass für den Betrachter bei entsprechender Bewegung des Gitterbildes ein Bewegungsbild entsteht.

46. Verfahren nach wenigstens einem der Ansprüche 39 bis 43, **dadurch gekennzeichnet, dass** das Gitterbild in unterschiedlichen Orientierungen eine sich vergrößernde oder verkleinernde Umrisslinie eines Bildmotivs zeigt, so dass für den Betrachter bei entsprechender Bewegung des Gitterbildes ein Pumpbild entsteht.

47. Verfahren nach wenigstens einem der Ansprüche 39 bis 43, **dadurch gekennzeichnet, dass** das Gitterbild zumindest zwei Ansichten eines Bildmotivs aus unterschiedlichen Betrachtungsrichtungen zeigt und die unterschiedlichen Orientierungen der Ansichten auf Grundlage eines vorgewählten Betrachtungsabstands für das Gitterbild so festgesetzt werden, dass für den Betrachter ein Stereobild des Bildmotivs entsteht.

48. Verfahren nach wenigstens einem der Ansprüche 39 bis 43, **dadurch gekennzeichnet, dass** das Gitterbild zumindest in einem Teilbereich in unterschiedlichen Orientierungen das gleiche Bild zeigt, so dass für den Betrachter bei entsprechender Bewegung des Gitterbildes in diesem Teilbereich keine Änderung des Bildinhalts auftritt.

49. Verfahren nach Anspruch 48, **dadurch gekennzeichnet, dass** die Gitterbildbereiche in nebeneinander angeordnete schmale Streifen zerlegt werden, die den in unterschiedlichen Orientierungen erkennbaren Bildbereichen zugeordnet sind, und die bevorzugt so mit Gittermustern gefüllt werden, dass die Endpunkte des Gittermusters eines Streifens mit den Anfangspunkten des Gittermusters des benachbarten Streifens zusammenfallen.

50. Verfahren nach wenigstens einem der Ansprüche 17 bis 49, **dadurch gekennzeichnet, dass** unter Berücksichtigung des Winkels zwischen dem Betrachtungsvektor $\vec{k}'(\vec{r})$ und dem Beleuchtungsvektor $\vec{k}(\vec{r})$ in Schritt d) für jeden Unterbereich aus der festgelegten Orientierung des Gitterbilds ein Azimutwinkel relativ zu einer Referenzrichtung berechnet wird, der die Winkelorientierung des Gittermusters des zugeordneten Gitterbereichs beschreibt.

51. Verfahren nach wenigstens einem der Ansprüche 17 bis 50, **dadurch gekennzeichnet, dass** ein ebenes Gitterbild erzeugt wird, wobei die Orientierung des Gitterbilds im Raum durch Festlegung von Beleuchtungs- und Betrachtungsrichtungen für das Gitterbild festgelegt wird.

52. Verfahren nach Anspruch 51, **dadurch gekennzeichnet, dass** unter Berücksichtigung des Winkels zwischen einem vorgewählten Betrachtungsvektor und einem vorgewählten Beleuchtungsvektor in Schritt d) für jeden Bildbereich aus den festgelegten Beleuchtungs- und Betrachtungsrichtungen ein Azimutwinkel relativ zu einer Referenzrichtung berechnet wird, der die Winkelorientierung des Gittermusters des zugeordneten Gitterbereichs beschreibt.

53. Verfahren nach wenigstens einem der Ansprüche 17 bis 50, **dadurch gekennzeichnet, dass** ein zylindrisch gekrümmtes Gitterbild erzeugt wird, und die Orientierung des Gitterbilds im Raum durch Festlegung eines Drehwinkels um die Zylinderachse festgelegt wird.

54. Verfahren nach Anspruch 53, **dadurch gekennzeichnet, dass** in Schritt d) unter Berücksichtigung des Winkels zwischen einem vorgewählten Betrachtungsvektor und einem vorgewählten Beleuchtungsvektor, dem Drehwinkel um die Zylinderachse und der Lage des jeweiligen Unterbereichs ein Azimutwinkel relativ zu einer Referenzrichtung berechnet wird, der die Winkelorientierung des Gittermusters des zugeordneten Gitterbereichs beschreibt.

55. Verfahren nach wenigstens einem der Ansprüche 17 bis 54, **dadurch gekennzeichnet, dass** das Gitterbild mit einem ausgedehnten Gitterbildbereich erzeugt wird, der bei Betrachtung aus einem vorgewählten Betrachtungsabstand mit im Wesentlichen konstantem Farbeindruck erscheint, indem

- der ausgedehnte Gitterbildbereich in eine Mehrzahl von Teilbereichen zerlegt wird, für die in Schritt d) jeweils eine Gitterkonstante und eine Winkelorientierung bestimmt wird, wobei für die Bestimmung ein Betrachtungsvektor verwendet wird, der vom jeweiligen Teilbereich zum Auge des Betrachters zeigt, und
- in Schritt e) der Gitterbildbereich in dem Substrat mit diesen Teilbereichen erzeugt wird, und die Teilbereiche jeweils mit einem Gittermuster mit der in Schritt d) bestimmten Gitterkonstanten und eine Winkelorientierung gefüllt werden.

56. Verfahren nach wenigstens einem der Ansprüche 17 bis 55, **dadurch gekennzeichnet, dass** das Gitterbild mittels eines optischen oder eines Elektronenstrahl-Lithographieverfahrens einem strahlungsempfindlichen Material, insbesondere einer auf einem Substrat aufgebrachten Resistschicht, eingeschrieben wird, um in diesem eine Zustandsänderung herbeizuführen, vorzugsweise eine Reliefstruktur zu erzeugen.

57. Verfahren nach Anspruch 56, **dadurch gekennzeichnet, dass** nach der Herstellung einer Reliefstruktur eine Metallisierungsschicht auf das strahlungsempfindliche Material aufgebracht wird und dass davon eine galvanische Abformung erzeugt wird.

58. Verfahren nach Anspruch 57, **dadurch gekennzeichnet, dass** die Abformung oder eine weitere Abformung derselben als Prägestempel zum Prägen eines Gitterbildes in ein Substrat verwendet wird.

59. Verfahren nach wenigstens einem der Ansprüche 56 bis 58, **dadurch gekennzeichnet, dass** ein gekrümmtes Gitterbild erzeugt wird, indem das Gitterbild unter Berücksichtigung der sich bei der nachfolgenden Verformung ergebenden Verzerrungen einem ebenen Substrat eingeschrieben wird, und das ebene Substrat dann in die gewünschte gekrümmte Form gebracht wird.

60. Verfahren nach wenigstens einem der Ansprüche 56 bis 58, **dadurch gekennzeichnet, dass** ein gekrümmtes Gitterbild erzeugt wird, indem ein Objekt mit der gewünschten gekrümmten Form mit dem strahlungsempfindlichen Material beschichtet wird und das Gitterbild unter Bewegung des Objekts und/oder der Lithographievorrichtung sukzessive in das strahlungsempfindliche Material eingeschrieben wird.

61. Verfahren nach wenigstens einem der Ansprüche 17 bis 60, **dadurch gekennzeichnet, dass** das Gitterbild rasterfrei in dem Substrat erzeugt wird.

62. Verfahren nach einem der Ansprüche 17 bis 61, **dadurch gekennzeichnet, dass** die Echtfarbgebiete zu mehr als 90% und insbesondere zu mehr als 95% aus zwei Spektralfarbbereichen gebildet werden.

63. Verfahren nach Anspruch 17, **dadurch gekennzeichnet, dass** die Echtfarbgebiete im verbleibenden Teil zumindest teilweise aus einem Spektralfarbbereich gebildet werden.

64. Verfahren nach Anspruch 17 oder 63, **dadurch gekennzeichnet, dass** die Echtfarbgebiete im verbleibenden Teil zumindest teilweise aus drei Spektralfarbbereichen gebildet werden.

65. Gegenstand, insbesondere Datenträger oder Sicherheitselement zum Aufbringen auf einen Datenträger, mit einem Gitterbild nach einem der Ansprüche 1 bis 16.

66. Gegenstand nach Anspruch 65, **dadurch gekennzeichnet, dass** das Gitterbild in unterschiedlichen Orientierungen mehrere Bilder zeigt, so dass für den Betrachter insbesondere ein Wechselbild, ein Bewegungsbild, ein Stereobild, ein Kulissenbild oder ein Gitterbild mit beim Bewegen konstantem Bildeindruck entsteht.

**67.** Gegenstand nach wenigstens einem der Ansprüche 65 oder 66, **dadurch gekennzeichnet, dass** das Gitterbild rasterfrei ist.

**68.** Gegenstand nach wenigstens einem der Ansprüche 65 bis 67, **dadurch gekennzeichnet, dass** das Gitterbild transparent und für die Betrachtung in Durchsicht ausgebildet ist.

**69.** Gegenstand nach wenigstens einem der Ansprüche 65 bis 68, **dadurch gekennzeichnet, dass** der Gegenstand ein Sicherheitselement, insbesondere ein Sicherheitsfaden, ein Etikett oder ein Transferelement, ist.

**70.** Gegenstand nach wenigstens einem der Ansprüche 65 bis 69, **dadurch gekennzeichnet, dass** der Gegenstand im Bereich des Gitterbilds gekrümmt, insbesondere zylindrisch gekrümmt ist.

**71.** Gegenstand nach wenigstens einem der Ansprüche 65 bis 70, **dadurch gekennzeichnet, dass** der Gegenstand ein Datenträger, insbesondere eine Banknote, ein Wertdokument, ein Pass, eine Ausweiskarte oder eine Urkunde, ist.

**72.** Verwendung eines Gitterbilds nach einem der Ansprüche 1 bis 16 oder eines Gegenstands nach einem der Ansprüche 65 bis 71 zur Sicherung von Waren beliebiger Art.

**Claims**

**1.** A grating image for depicting at least one true color image that exhibits a plurality of true color areas (14) that, when the grating image is illuminated, each shine in one desired, arbitrarily choosable true color, **characterized in that** the true color areas consist to more than 70% of only one first and one second spectral color region (16-1, 16-2), the spectral color regions each including grating patterns (18-1, 18-2) that are defined by a grating constant and an angular orientation, and at least the grating patterns of the first spectral color regions being defined separately for each true color area such that, when illuminated, the first and second spectral color region together produce the true color of the true color area through additive color mixing.

**2.** The grating image according to claim 1, **characterized in that,** in at least one dimension, the expanse of the spectral color regions lies below the resolution limit of the eye.

**3.** The grating image according to claim 1 or 2, **characterized in that** the spectral color regions are formed as narrow strips having a width below the resolution limit of the eye.

**4.** The grating image according to claim 1 or 2, **characterized in that** the spectral color regions are formed as small rectangular elements of any form having a size below the resolution limit of the eye.

**5.** The grating image according to claim 3 or 4, **characterized in that** the narrow strips or small rectangular elements are oriented parallel to grating lines of the grating pattern.

**6.** The grating image according to at least one of claims 1 to 5, **characterized in that** the spectral color regions each include one grating pattern that corresponds to one spectral color and that, when illuminated, produces this spectral color, the spectral colors and the surface area ratio of the two grating patterns corresponding to the spectral colors being chosen such that, through additive color mixing, the two spectral color regions produce the hue and the saturation of the true color of the true color area.

**7.** The grating image according to at least one of claims 1 to 6, **characterized in that** the two spectral color regions of a true color area are filled in an areal fraction with the respective grating pattern that corresponds to the brightness of the true color.

**8.** The grating image according to claim 7, **characterized in that,** from the illumination radiation, the grating patterns of the two spectral color regions produce the respective spectral color with substantially identical effectiveness.

**9.** The grating image according to at least one of claims 1 to 6, **characterized in that** the two spectral color regions of a true color area are filled with grating patterns of such an effectiveness and such an areal fraction that, when illuminated, they reproduce the brightness of the true color.

10. The grating image according to at least one of claims 1 to 9, **characterized in that** a first of the spectral color regions includes in each case one grating pattern that corresponds to one spectral color selected from a predefined group, and the grating pattern of the second spectral color region is coordinated with the selected spectral color of the first spectral color region such that, through additive color mixing, the two spectral colors produce the hue and the saturation of the true color of the true color area.

11. The grating image according to claim 10, **characterized in that** the first of the spectral color regions includes in each case one grating pattern that corresponds to either the spectral color red or the spectral color blue.

12. The grating image according to claim 10 or 11, **characterized in that** the sizes of the two spectral color regions are coordinated with each other and with predefined illumination conditions such that, under the predefined illumination conditions and when the first spectral region is completely filled with the grating pattern of the selected spectral color and the second spectral region with a grating pattern that corresponds to the spectral color that is complementary thereto, through additive color mixing, the two spectral color regions together produce pure white.

13. The grating image according to one of claims 1 to 12, **characterized in that** two or more of the true color areas include grating patterns that produce metameric colors.

14. The grating image according to one of claims 1 to 13, **characterized in that** the true color areas consist to more than 90% and especially to more than 95% of two spectral color regions.

15. The grating image according to claim 1, **characterized in that** the remaining portion of the true color areas includes true color areas consisting of one spectral color region.

16. The grating image according to claim 1 or 15, **characterized in that** the remaining portion of the true color areas includes true color areas consisting of three spectral color regions.

17. A method for producing a grating image that displays at least one predefined true color image in which the grating image is produced having a plurality of true color areas that, when the grating image is illuminated, each shine in one desired, arbitrarily choosable true color, **characterized in that** the true color areas are formed to more than 70% from only one first and one second spectral color region, the spectral color regions each being formed having a grating pattern that is defined by a grating constant and an angular orientation, and at least the grating patterns of the first spectral color regions being defined separately for each true color area such that, when illuminated, the first and second spectral color region together produce the true color of the true color area through additive color mixing.

18. The method according to claim 17, **characterized in that** the spectral color regions are produced having an expanse that, in at least one dimension, lies below the resolution limit of the eye.

19. The method according to claim 17 or 18, **characterized in that** the spectral color regions are formed as narrow strips having a width below the resolution limit of the eye.

20. The method according to claim 17 or 18, **characterized in that** the spectral color regions are formed as small rectangular elements of any form having a size below the resolution limit of the eye.

21. The method according to claim 19 or 20, **characterized in that** the narrow strips or small rectangular elements are oriented parallel to grating lines of the grating pattern.

22. The method according to at least one of claims 17 to 21, **characterized in that,** for the true color of a true color area, two spectral colors and a proportional ratio are determined such that the spectral colors, when mixed proportionately through additive color mixing, produce the hue and the saturation of the true color of the true color area, and **in that** the spectral color regions are each provided with a grating pattern that corresponds to these spectral colors in a surface area ratio that corresponds to the proportional ratio.

23. The method according to claim 20, **characterized in that** the two spectral colors are defined **in that** a first spectral color is selected from a predefined group of spectral colors, and the second spectral color and the proportional ratio are coordinated with the first spectral color such that the two spectral colors, mixed proportionately through additive color mixing, produce the hue and the saturation of the true color of the true color area.

**24.** The method according to claim 23, **characterized in that** the first spectral color is selected from the group of the spectral color red and the spectral color blue.

**25.** The method according to one of claims 23 or 24, **characterized in that** the sizes of the two spectral color regions are coordinated with each other and with predefined illumination conditions such that, under the predefined illumination conditions and when the first spectral region is completely filled with the grating pattern of the selected spectral color and the second spectral region with a grating pattern that corresponds to the spectral color that is complementary thereto, through additive color mixing, the two spectral color regions together produce pure white.

**26.** The method according to claim 22, **characterized in that** the spectral colors are defined **in that**, in a chromaticity diagram, the chromaticity coordinates of the true color are specified, the spectral colors are defined by the two intersections of a straight line through the chromaticity coordinates of the true color with the spectral locus of the chromaticity diagram, and the proportional ratio is defined from the ratio of the color differences of the two intersections from the chromaticity coordinates of the true color.

**27.** The method according to claim 26, **characterized in that** the straight line through the chromaticity coordinates of the true color is chosen such that it runs substantially parallel to the purple line of the chromaticity diagram.

**28.** The method according to at least one of claims 17 to 27, **characterized in that** two or more of the true color areas are filled with grating patterns that, when illuminated, produce metameric colors.

**29.** The method according to claim 28, **characterized in that** the spectral colors of the grating patterns that produce the metameric colors are defined **in that**, in a chromaticity diagram, the chromaticity coordinates of the desired true color are specified, and the spectral colors for true color areas are each defined by the two intersections of different straight lines through the chromaticity coordinates of the true color with the spectral locus of the chromaticity diagram.

**30.** The method according to at least one of claims 17 to 29, **characterized in that** the true color image constitutes a grayscale image.

**31.** The method according to at least one of claims 17 to 30, **characterized in that,** for the true color of a true color area, a brightness value is defined, and the two spectral color regions of the true color area are filled in an areal fraction with the respective grating pattern that corresponds to the brightness of the true color.

**32.** The method according to at least one of claims 22 to 31, **characterized in that**

a) an orientation for the grating image in space is defined in which the predefined true color image is visible,
b) for each image region of the predefined true color image, a true color is defined in which the respective image region appears in the defined orientation,
c) grating image regions of the grating image are defined, each of which are allocated to one image region and whose arrangement within the grating image corresponds substantially to the arrangement of the image regions in the predefined image,
d) one or more true color areas are defined as sub-regions within each grating image region and, for each of the spectral color regions of the sub-regions, a grating constant and an angular orientation are determined from the defined orientation of the grating image and the defined spectral color of the spectral color region using the relationship

$$\vec{n}(\vec{r}) \times \left( \vec{k}'(\vec{r}) - \vec{k}(\vec{r}) \right) = m\vec{g}$$

wherein $\vec{r}$ *represents a reference test point in the* sub-region of the grating *image,* $\vec{n}(\vec{r})$, $\vec{k}'(\vec{r})$ and $\vec{k}(\vec{r})$ *the normal vector,* the viewing vector and the illumination vector at the reference test point $\vec{r}$, m the diffraction order and $\vec{g}$ the grating vector for the sub-region, and
e) a grating image having grating image regions is produced in a substrate, each spectral color region being filled with a grating pattern whose grating constant and angular orientation are given by the grating constant and angular orientation defined for this spectral color region in step d).

33. The method according to claim 32, **characterized in that** the shape and size of the sub-regions in step d) are defined depending on the curvature of the grating image.

34. The method according to claim 32 or 33, **characterized in that**, to define the grating constant and angular orientation for each sub-region, a viewing vector $\vec{k}\,'(\vec{r})$ is used that varies across the surface of the grating image and whose direction is given by the connecting line between the reference test point of the respective sub-region and a viewing point.

35. The method according to at least one of claims 32 to 34, **characterized in that,** to define the grating constant and angular orientation for each sub-region, an illumination vector $\vec{k}(\vec{r})$ is used that varies across the surface of the grating image and whose direction is given by the connecting line between an illumination point and the reference test point of the respective sub-region.

36. The method according to claim 32 or 33, **characterized in that,** to define the grating constant and angular orientation for each sub-region, a viewing vector $\vec{k}\,'$ is used that is constant across the surface of each grating image region or across the entire grating image surface and whose direction is given by the connecting line between a reference point that is representative of the grating image, and a viewing point.

37. The method according to at least one of claims 32, 33 or 36, **characterized in that,** to define the grating constant and angular orientation for each sub-region, an illumination vector $\vec{k}$ is used that is constant across the surface of each grating image region or across the entire grating image surface and whose direction is given by the connecting line between an illumination point and a reference point that is representative of the grating image.

38. The method according to at least one of claims 32 to 37, **characterized in that** the grating image regions in step e) are produced having a shape and a relative position that correspond substantially to the shape and the relative position of the allocated image regions.

39. The method according to at least one of claims 32 to 38, **characterized in that,** in different orientations, the grating image displays multiple images, steps a) to d) being carried out for each of the multiple images.

40. The method according to claim 39, **characterized in that** grating image regions that are allocated to image regions of different images at least partially overlap each other, especially are nested within each other, the overlapping grating image regions preferably being broken down into narrow strips and the narrow strips of the grating image regions being disposed alternatingly next to each other.

41. The method according to claim 40, **characterized in that** the width of the narrow strips is chosen to be below the resolution limit of the naked eye, the narrow strips preferably being oriented parallel to a spin or tilt axis of the grating image.

42. The method according to claim 40, **characterized in that** the grating image regions that are allocated to overlapping image regions of different images are broken down into small fractional regions of any shape, and the small fractional regions of the grating image regions are disposed nested within each other.

43. The method according to claim 42, **characterized in that** at least one characteristic measurement of the small fractional regions is chosen to be below the resolution limit of the naked eye.

44. The method according to at least one of claims 39 to 43, **characterized in that,** in different orientations, the grating image displays different images such that, upon appropriate movement of the grating image, an alternating image is created for the viewer.

45. The method according to at least one of claims 39 to 43, **characterized in that,** in different orientations, the grating image displays an image motif in different states of motion such that, upon appropriate movement of the grating image, a motion image is created for the viewer.

46. The method according to at least one of claims 39 to 43, **characterized in that,** in different orientations, the grating image displays a growing or shrinking contour line of an image motif such that, upon appropriate movement of the grating image, a pump image is created for the viewer.

47. The method according to at least one of claims 39 to 43, **characterized in that,** from different viewing directions, the grating image displays at least two views of an image motif, and the different orientations of the views are defined based on a prechosen viewing distance for the grating image such that a stereo image of the image motif is created for the viewer.

48. The method according to at least one of claims 39 to 43, **characterized in that,** in different orientations, the grating image displays the same image, at least in a fractional region, such that, upon appropriate movement of the grating image, no change of the image content appears for the viewer in this fractional region.

49. The method according to claim 48, **characterized in that** the grating image regions are broken down into narrow strips that are disposed next to each other and that are allocated to the image regions that are perceptible in different orientations, and that preferably are filled with grating patterns such that the end points of the grating pattern of one strip coincide with the beginning points of the grating pattern of the adjacent strip.

50. The method according to at least one of claims 17 to 49, **characterized in that**, taking into account the angle between the viewing vector $\vec{k}'(\vec{r})$ and the illumination vector $\vec{k}(\vec{r})$, in step d), for each sub-region, from the defined orientation of the grating image, an azimuth angle relative to a reference direction is calculated that describes the angular orientation of the grating pattern of the allocated grating region.

51. The method according to at least one of claims 17 to 50, **characterized in that** a planar grating image is produced, the orientation of the grating image in space being defined by defining illumination and viewing directions for the grating image.

52. The method according to claim 51, **characterized in that,** taking into account the angle between a prechosen viewing vector and a prechosen illumination vector, in step d), for each image region, from the defined illumination and viewing directions, an azimuth angle relative to a reference direction is calculated that describes the angular orientation of the grating pattern of the allocated grating region.

53. The method according to at least one of claims 17 to 50, **characterized in that** a cylindrically curved grating image is produced and the orientation of the grating image in space is defined by defining a rotation angle about the cylinder axis.

54. The method according to claim 53, **characterized in that,** in step d), taking into account the angle between a prechosen viewing vector and a prechosen illumination vector, the rotation angle about the cylinder axis and the position of the respective sub-region, an azimuth angle relative to a reference direction is calculated that describes the angular orientation of the grating pattern of the allocated grating region.

55. The method according to at least one of claims 17 to 54, **characterized in that** the grating image is produced having an expansive grating image region that, when viewed from a prechosen viewing distance, appears having a substantially constant color impression **in that**

- the expansive grating image region is broken down into a plurality of fractional regions, for each of which, in step d), a grating constant and an angular orientation is defined, a viewing vector that points from the respective fractional region to the eye of the viewer being used for the definition, and
- in step e), the grating image region in the substrate is produced having these fractional regions, and the fractional regions are each filled with a grating pattern having the grating constant defined in step d) and an angular orientation.

56. The method according to at least one of claims 17 to 55, **characterized in that** the grating image is inscribed by means of an optical or an electron beam lithography method in a radiation-sensitive material, especially a resist layer applied on a substrate, to induce therein a state change, preferably to produce a relief structure.

57. The method according to claim 56, **characterized in that,** after the manufacture of a relief structure, a metallization layer is applied to the radiation-sensitive material, and **in that** a galvanic casting is produced therefrom.

**58.** The method according to claim 57, **characterized in that** the casting or a further casting of the same is used as an embossing stamp to emboss a grating image in a substrate.

**59.** The method according to at least one of claims 56 to 58, **characterized in that** a curved grating image is produced **in that** the grating image is inscribed in a planar substrate taking into account the distortions resulting in the subsequent deformation, and the planar substrate is then brought into the desired curved shape.

**60.** The method according to at least one of claims 56 to 58, **characterized in that** a curved grating image is produced **in that** an object having the desired curved shape is coated with the radiation-sensitive material and the grating image is successively inscribed in the radiation-sensitive material while moving the object and/or the lithography device.

**61.** The method according to at least one of claims 17 to 60, **characterized in that** the grating image is produced grid-free in the substrate.

**62.** The method according to one of claims 17 to 61, **characterized in that** the true color areas are formed to more than 90% and especially to more than 95% from two spectral color regions.

**63.** The method according to claim 17, **characterized in that** the true color areas in the remaining portion are formed at least in part from one spectral color region.

**64.** The method according to claim 17 or 63, **characterized in that** the true color areas in the remaining portion are formed at least in part from three spectral color regions.

**65.** An object, especially a data carrier or a security element for application to a data carrier, having a grating image according to one of claims 1 to 16.

**66.** The object according to claim 65, **characterized in that,** in different orientations, the grating image displays multiple images such that especially an alternating image, a motion image, a stereo image, a backdrop image or a grating image having a constant image impression when in motion is created for the viewer.

**67.** The object according to at least one of claims 65 or 66, **characterized in that** the grating image is grid-free.

**68.** The object according to at least one of claims 65 to 67, **characterized in that** the grating image is transparent and designed for viewing when looked through.

**69.** The object according to at least one of claims 65 to 68, **characterized in that** the object is a security element, especially a security thread, a label or a transfer element.

**70.** The object according to at least one of claims 65 to 69, **characterized in that** the object is curved in the region of the grating image, especially cylindrically curved.

**71.** The object according to at least one of claims 65 to 70, **characterized in that** the object is a data carrier, especially a banknote, a value document, a passport, an identification card or a certificate.

**72.** A use of a grating image according to one of claims 1 to 16 or of an object according to one of claims 65 to 71 for securing goods of any kind.

**Revendications**

**1.** Motif à réseau diffractant pour la représentation d'au moins une image en vraies couleurs, qui comprend un grand nombre de régions de vraies couleurs (14), qui après éclairement du motif à réseau diffractant émettent chacun une lumière en une vraie couleur souhaitée, pouvant être choisie à volonté, **caractérisé en ce que** les domaines de vraies couleurs sont pour l'essentiel constitués pour plus de 70% uniquement d'un premier et d'un deuxième domaines de couleurs spectrales (16-1, 16-2), chacun des domaines de couleurs spectrales contenant un modèle de réseau (18-1, 18-2) défini par une constante de réseau et une orientation angulaire, et au moins les modèles de réseau des premiers domaines de couleurs spectrales étant définis séparément pour chaque région de vraies couleurs, de sorte que, lors d'un éclairement, le premier et le deuxième domaines de couleurs spectrales produisent ensemble, par un mélange additif de couleurs, la vraie couleur de la région de vraies couleurs.

2.  Motif à réseau diffractant selon la revendication 1, **caractérisé en ce que** l'extension des domaines de couleurs spectrales correspond à au moins une dimension en dessous du seuil de résolution de l'oeil.

3.  Motif à réseau diffractant selon la revendication 1 ou 2, **caractérisé en ce que** les domaines de couleurs spectrales sont configurés comme des bandes étroites, ayant une largeur inférieure au seuil de résolution de l'oeil.

4.  Motif à réseau diffractant selon la revendication 1 ou 2, **caractérisé en ce que** les domaines de couleurs spectrales sont configurés sous forme de petits éléments rectangulaires de forme quelconque, avec une taille inférieure au seuil de résolution de l'oeil.

5.  Motif à réseau diffractant selon la revendication 3 ou 4, **caractérisé en ce que** les bandes étroites, ou les petits éléments rectangulaires, sont orientés parallèlement aux traits de réseau du modèle de réseau.

6.  Motif à réseau diffractant selon au moins l'une des revendications 1 à 5, **caractérisé en ce que** chacun des domaines de couleurs spectrales contient un modèle de réseau correspondant à une couleur spectrale, produisant cette couleur spectrale après éclairement, les couleurs spectrales et le rapport des aires des deux modèles de réseau qui correspondent aux couleurs spectrales étant choisis de façon que les deux domaines de couleurs spectrales produisent, par mélange additif de couleurs, la tonalité chromatique et la saturation de la vraie couleur de la région de vraies couleurs.

7.  Motif à réseau diffractant selon au moins l'une des revendications 1 à 6, **caractérisé en ce que** les deux domaines de couleurs spectrales d'une région de vraies couleurs sont, dans une partie de leur surface, remplis du modèle de réseau qui correspond à la luminosité de la vraie couleur.

8.  Motif à réseau diffractant selon la revendication 7, **caractérisé en ce que** le modèle de réseau des deux domaines de couleurs spectrales produit la couleur spectrale correspondante, avec une efficacité pour l'essentiel identique à partir du rayonnement d'éclairement.

9.  Motif à réseau diffractant selon au moins l'une des revendications 1 à 6, **caractérisé en ce que** les deux domaines de couleurs spectrales d'une région de vraies couleurs sont remplis de modèles de réseau ayant une efficacité, et un pourcentage d'aire tels qu'ils reproduisent la luminosité de la vraie couleur en présence d'un éclairement.

10. Motif à réseau diffractant selon au moins l'une des revendications 1 à 9, **caractérisé en ce qu'**un premier des domaines de couleurs spectrales contient un modèle de réseau, qui correspond à une couleur spectrale sélectionnée dans un groupe prédéfini, et le modèle de réseau du deuxième domaine de couleurs spectrales est adapté à la couleur spectrale sélectionnée du premier domaine de couleurs spectrales de telle sorte que les deux couleurs spectrales produisent, par mélange additif de couleurs, la tonalité chromatique et la saturation de la vraie couleur de la région de vraies couleurs.

11. Motif à réseau diffractant selon la revendication 10, **caractérisé en ce que** le premier des domaines de couleurs spectrales contient un modèle de réseau, qui correspond à la couleur spectrale rouge ou à la couleur spectrale bleue.

12. Motif à réseau diffractant selon la revendication 10 ou 11, **caractérisé en ce que** les dimensions des deux domaines de couleurs spectrales sont adaptées l'une à l'autre, et à des conditions d'éclairement prédéfinies, de telle sorte que les deux domaines de couleurs spectrales produisent ensemble un blanc pur par un mélange additif de couleurs, dans les conditions prédéfinies d'éclairement, pour un remplissage complet du premier domaine spectral par le modèle de réseau de la couleur spectrale sélectionnée, et du deuxième domaine spectral par un modèle de réseau qui correspond à la couleur spectrale qui lui est complémentaire.

13. Motif à réseau diffractant selon l'une des revendications 1 à 12, **caractérisé en ce que** deux régions de vraies couleurs, ou plus, contiennent des modèles de réseau produisant des couleurs métamères.

14. Motif à réseau diffractant selon l'une des revendications 1 à 13, **caractérisé en ce que** les régions de vraies couleurs sont pour plus de 90 % et en particulier pour plus de 95 % constituées de deux domaines de couleurs spectrales.

**15.** Motif à réseau diffractant selon la revendication 1, **caractérisé en ce que** la partie restante des régions de vraies couleurs contient des régions de vraies couleurs constituées d'un domaine de couleurs spectrales.

**16.** Motif à réseau diffractant selon la revendication 1 ou 15, **caractérisé en ce que** la partie restante des régions de vraies couleurs contient des régions de vraies couleurs constituées de trois domaines de couleurs spectrales.

**17.** Procédé de fabrication d'un motif à réseau diffractant, qui présente au moins une image prédéfinie en vraies couleurs, dans lequel le motif à réseau diffractant est produit avec un grand nombre de régions de vraies couleurs, qui en présence d'un éclairement du motif à réseau diffractant émettent chacune une lumière en une vraie couleur souhaitée, pouvant être choisie à volonté, **caractérisé en ce que** les régions de vraies couleurs ne sont que, pour une partie principale, formées pour plus de 70% d'un premier et d'un deuxième domaines de couleurs spectrales, les domaines de couleurs spectrales formant chacun un modèle de réseau défini par une constante de réseau et une orientation angulaire, et au moins les modèles de réseau des premiers domaines de couleurs spectrales étant définis séparément pour chaque région de vraies couleurs, de telle sorte que, en présence d'un éclairement, le premier et le deuxième domaines de couleurs spectrales produisent ensemble, par mélange additif de couleurs, la vraie couleur de la région de vraies couleurs.

**18.** Procédé selon la revendication 17, **caractérisé en ce que** les domaines de couleurs spectrales sont produits avec une extension qui correspond à au moins une dimension inférieure au seuil de résolution de l'oeil.

**19.** Procédé selon la revendication 17 ou 18, **caractérisé en ce que** les domaines de couleurs spectrales sont configurés comme des bandes étroites ayant une largeur inférieure au seuil de résolution de l'oeil.

**20.** Procédé selon la revendication 17 ou 18, **caractérisé en ce que** les domaines de couleurs spectrales sont configurés comme de petits éléments rectangulaires de forme quelconque, ayant une taille inférieure au seuil de résolution de l'oeil.

**21.** Procédé selon la revendication 19 ou 20, **caractérisé en ce que** les bandes étroites ou les petits éléments rectangulaires sont orientés perpendiculairement aux traits du réseau du modèle de réseau.

**22.** Procédé selon au moins l'une des revendications 17 à 21, **caractérisé en ce que**, pour la vraie couleur d'une région de vraies couleurs, on définit deux couleurs spectrales et une proportion telles que les couleurs spectrales, en présence d'un mélange en une certaine proportion, produisent par un mélange additif de couleurs la tonalité chromatique et la saturation de la vraie couleur de la région de vraies couleurs, et que les domaines de couleurs spectrales soient pourvus chacun d'un modèle de réseau correspondant à ces couleurs spectrales, selon un rapport entre aires correspondant à la proportion.

**23.** Procédé selon la revendication 20, **caractérisé en ce que** les deux couleurs spectrales sont définies par le fait qu'une première couleur spectrale est choisie dans un groupe prédéfini de couleurs spectrales, et la deuxième couleur spectrale et la proportion sont adaptées à la première couleur spectrale de telle sorte que les deux couleurs spectrales, après avoir été mélangées conformément à la proportion, produisent par un mélange additif de couleurs la tonalité chromatique et la saturation de la vraie couleur de la région de vraies couleurs.

**24.** Procédé selon la revendication 23, **caractérisé en ce que** la première couleur spectrale est choisie dans le groupe comprenant la couleur spectrale rouge et la couleur spectrale bleue.

**25.** Procédé selon l'une des revendications 23 ou 24, **caractérisé en ce que** les tailles des deux domaines de couleurs spectrales sont adaptées l'une à l'autre et à des conditions prédéfinies d'éclairement de telle sorte que les deux domaines de couleurs spectrales produisent ensemble un blanc pur par un mélange additif de couleurs, dans les conditions prédéterminées d'éclairement, pour un remplissage complet du premier domaine spectral par le modèle de réseau de la deuxième couleur spectrale, et du deuxième domaine spectral par un modèle de réseau qui correspond à la couleur spectrale qui lui est complémentaire.

**26.** Procédé selon la revendication 22, **caractérisé en ce que** les couleurs spectrales sont définies par le fait que, dans un diagramme de chromaticité, on indique le point de chromaticité de la vraie couleur, on détermine les couleurs spectrales par les deux points d'intersection d'une droite passant par le point de chromaticité de la vraie couleur et du lieu spectral du diagramme de chromaticité, et on détermine la proportion à partir du rapport des écarts chromatiques entre les deux points d'intersection et le point de chromaticité de la vraie couleur.

**27.** Procédé selon la revendication 26, **caractérisé en ce que** la droite passant par le point de chromaticité de la vraie couleur est choisie de telle sorte qu'elle soit pour l'essentiel parallèle à la ligne des pourpres du diagramme de chromaticité.

**28.** Procédé selon au moins l'une des revendications 17 à 27, **caractérisé en ce que** deux des régions de vraies couleurs, ou plus, sont remplies de modèles de réseau, qui en présence d'un éclairement produisent des couleurs métamères.

**29.** Procédé selon la revendication 28, **caractérisé en ce que** les couleurs spectrales des modèles de réseau produisant les couleurs métamères sont déterminées par indication, dans un diagramme de chromaticité, du point de chromaticité de la vraie couleur souhaitée, et les couleurs spectrales pour les régions de vraies couleurs sont chacune déterminées par les deux points d'intersection de différentes droites passant par le point de chromaticité de la vraie couleur, avec le lieu spectral du diagramme de chromaticité.

**30.** Procédé selon au moins l'une des revendications 17 à 29, **caractérisé en ce que** l'image en vraies couleurs est une image en niveaux de gris.

**31.** Procédé selon au moins l'une des revendications 17 à 30, **caractérisé en ce que**, pour la vraie couleur d'une région de vraies couleurs, on détermine une valeur de la luminosité, et les deux domaines de couleurs spectrales de la région de vraies couleurs sont, selon une certaine proportion en aire, remplis du modèle de réseau qui correspond à la luminosité de la vraie couleur.

**32.** Procédé selon au moins l'une des revendications 22 à 31, **caractérisé en ce que**

a) on définit une orientation pour le motif à réseau diffractant dans l'espace dans lequel est visible l'image prédéfinie en vraies couleurs,
b) on définit une vraie couleur pour chaque domaine de l'image prédéfinie en vraies couleurs, dans lequel le domaine d'image correspondant apparaît pour l'orientation prédéfinie,
c) on définit des domaines de motifs à réseau diffractant du motif à réseau diffractant, dont chacun est affecté à un domaine de l'image, et dont la disposition, à l'intérieur du motif à réseau diffractant, correspond pour l'essentiel à la disposition des domaines d'image dans l'image prédéfinie,
d) on définit une ou plusieurs régions de vraies couleurs, en tant que sous-domaines à l'intérieur de chaque domaine du motif à réseau diffractant, et, pour chacun des domaines de couleurs spectrales des sous-domaines, à partir de l'orientation prédéfinie du motif à réseau diffractant, ainsi que de la couleur spectrale déterminée du domaine de couleurs spectrales, on détermine par utilisation de la relation

$$\vec{n}\,(\vec{r})\;\mathrm{x}\;(\vec{k}\,'(\vec{r})) = m\,\vec{g}$$

une constante de réseau et une orientation angulaire, où r est un point de référence dans le sous-domaine du motif à réseau diffractant, $\vec{n}(\vec{r})$, $\vec{k}'(\vec{r})$ et $\vec{k}\,(\vec{r})$ représentent respectivement le vecteur normal, le vecteur d'observation et le vecteur d'éclairement au point de référence $\vec{r}$, m est l'ordre de diffraction, et $\vec{g}$ est le vecteur de réseau pour le sous-domaine, et
e) on produit un motif à réseau diffractant, comportant des domaines de motif à réseau diffractant dans un substrat, chaque domaine de couleurs spectrales étant rempli d'un modèle de réseau, dont la constante de réseau et l'orientation angulaire sont définies par la constante de réseau et l'orientation angulaire définies dans l'étape d) pour ce domaine de couleurs spectrales.

**33.** Procédé selon la revendication 32, **caractérisé en ce que** la forme et la taille des sous-domaines de l'étape d) sont définies en fonction de la courbure du motif à réseau diffractant.

**34.** Procédé selon la revendication 32 ou 33, **caractérisé en ce que**, pour déterminer la constante de réseau et l'orientation angulaire pour chaque sous-domaine, on utilise un vecteur d'observation $\vec{k}'(\vec{r})$, qui varie sur la surface du motif à réseau diffractant, et dont la direction est définie par la ligne qui relie le point de référence du sous-domaine considéré à un point d'observation.

**35.** Procédé selon au moins l'une des revendications 32 à 34, **caractérisé en ce que**, pour déterminer la constante de réseau et l'orientation angulaire pour chaque sous-domaine, on utilise un vecteur d'éclairement $\vec{k}\,(\vec{r})$, qui varie sur la surface du motif à réseau diffractant, et dont la direction est définie par la ligne qui relie un point d'éclairement et le point de référence du sous-domaine correspondant.

36. Procédé selon la revendication 32 ou 33, **caractérisé en ce que**, pour déterminer la constante de réseau et l'orientation angulaire pour chaque sous-domaine, on utilise un vecteur d'observation $\vec{k}'$ constant sur la surface de chaque domaine du motif à réseau diffractant, ou sur la totalité de la surface du motif à réseau diffractant, vecteur dont la direction est définie par la ligne qui relie un point de référence représentatif du motif à réseau diffractant et un point d'observation.

37. Procédé selon au moins l'une des revendications 32, 33 ou 36, **caractérisé en ce que**, pour déterminer la constante de réseau et l'orientation angulaire pour chaque sous-domaine, on utilise un vecteur d'éclairement $\vec{k}$, constant sur la surface de chaque domaine du motif à réseau diffractant ou sur la totalité de la surface du motif à réseau diffractant, vecteur dont la direction est définie par la ligne qui relie un point d'éclairement et un point de référence représentatif du motif à réseau diffractant.

38. Procédé selon au moins l'une des revendications 32 à 37, **caractérisé en ce que** les domaines du motif à réseau diffractant de l'étape e) sont produits avec une forme et une position relative qui pour l'essentiel correspondent respectivement à la forme et à la position relative des domaines d'image qui leur sont affectés.

39. Procédé selon au moins l'une des revendications 32 à 38, **caractérisé en ce que** le motif à réseau diffractant présente, dans des orientations différentes, plusieurs images, les étapes a) à d) étant mises en oeuvre pour chacune des plusieurs images.

40. Procédé selon la revendication 39, **caractérisé en ce que** les domaines du motif à réseau diffractant qui sont affectés aux domaines d'image de différentes images, se chevauchent au moins partiellement les uns les autres, et en particulier sont emboîtés les uns dans les autres, les domaines en chevauchement du motif à réseau diffractant étant décomposés de préférence en bandes étroites, les bandes étroites des domaines du motif à réseau diffractant étant disposées en alternance les unes à côté des autres.

41. Procédé selon la revendication 40, **caractérisé en ce que** la largeur des bandes étroites est choisie en dessous du seuil de résolution de l'oeil nu, les bandes étroites étant de préférence orientées parallèlement à un axe de rotation ou de basculement du motif à réseau diffractant.

42. Procédé selon la revendication 40, **caractérisé en ce que** les domaines du motif à réseau diffractant qui sont affectés à des domaines d'image en chevauchement appartenant à des images différentes, sont décomposés en petits domaines partiels, de forme quelconque, les petits domaines partiels des domaines du motif à réseau diffractant étant disposés en étant emboîtés les uns dans les autres.

43. Procédé selon la revendication 42, **caractérisé en ce qu'**au moins une dimension caractéristique des petits domaines partiels est choisie en dessous du seuil de résolution de l'oeil nu.

44. Procédé selon au moins l'une des revendications 39 à 43, **caractérisé en ce que** le motif à réseau diffractant présente, dans des orientations différentes, des images différentes, de sorte qu'il se crée pour l'observateur une image changeante quand le motif à réseau diffractant subit un mouvement approprié.

45. Procédé selon au moins l'une des revendications 39 à 43, **caractérisé en ce que** le motif à réseau diffractant présente, dans des orientations différentes, un motif d'image dans différents états de mouvement, de sorte qu'il se forme pour l'observateur, en présence d'un mouvement correspondant du motif à réseau diffractant, une image de mouvement.

46. Procédé selon au moins l'une des revendications 39 à 43, **caractérisé en ce que** le motif à réseau diffractant présente, dans des orientations différentes, un contour agrandi ou diminué d'un motif d'image, de sorte qu'il se crée pour l'observateur, pour un mouvement correspondant du motif à réseau diffractant, un sprite.

47. Procédé selon au moins l'une des revendications 39 à 43, **caractérisé en ce que** le motif à réseau diffractant présente au moins deux vues d'un motif d'image provenant de directions d'observation différentes, et les orientations différentes des vues sont déterminées sur la base d'une distance d'observation présélectionnée pour le motif à réseau diffractant, de façon qu'il se crée pour l'observateur une image stéréo du motif d'image.

**48.** Procédé selon au moins l'une des revendications 39 à 43, **caractérisé en ce que** le motif à réseau diffractant présente, au moins dans un domaine partiel, pour des orientations différentes, la même image de telle sorte que, pour l'observateur, aucune modification du contenu de l'image ne se produit en présence d'un mouvement correspondant du motif à réseau diffractant dans ce domaine partiel.

**49.** Procédé selon la revendication 48, **caractérisé en ce que** les domaines du motif à réseau diffractant sont décomposés en bandes étroites disposées les unes à côté des autres, qui sont affectées aux domaines d'image reconnaissables dans différentes directions, et qui de préférence sont remplies de modèles de réseau de telle sorte que les points terminaux du modèle de réseau d'une bande coïncident avec les points initiaux du modèle de réseau de la bande voisine.

**50.** Procédé selon au moins l'une des revendications 17 à 49, **caractérisé en ce que**, en prenant en compte l'angle entre le vecteur d'observation $\vec{k}'(\vec{r})$ et le vecteur d'éclairement $\vec{k}(\vec{r})$ dans l'étape d) pour chaque sous-domaine, on calcule, à partir de l'orientation constatée du motif à réseau diffractant, un angle azimutal par rapport à une direction de référence, qui décrit l'orientation angulaire du modèle de réseau du domaine de réseau affecté.

**51.** Procédé selon au moins l'une des revendications 17 à 50, **caractérisé en ce que** l'on produit un motif à réseau diffractant plan, l'orientation du motif à réseau diffractant étant défini dans l'espace par une définition des directions d'éclairement et d'observation pour le motif à réseau diffractant.

**52.** Procédé selon la revendication 51, **caractérisé en ce que**, en prenant en compte l'angle entre un vecteur d'observation présélectionné et un vecteur d'éclairement présélectionné dans l'étape d) pour chaque domaine d'image, on calcule à partir des directions définies d'éclairement et d'observation un angle azimutal par rapport à une direction de référence, et qui décrit l'orientation angulaire du modèle de réseau du domaine de réseau affecté.

**53.** Procédé selon au moins l'une des revendications 17 à 50, **caractérisé en ce que** l'on produit un motif à réseau diffractant à courbure cylindrique, et l'orientation du motif à réseau diffractant est défini dans l'espace par définition d'un angle de rotation autour de l'axe du cylindre.

**54.** Procédé selon la revendication 53, **caractérisé en ce que**, dans l'étape d), en prenant en compte l'angle entre un vecteur d'observation présélectionné et un vecteur d'éclairement présélectionné, l'angle de rotation autour de l'axe du cylindre et la position du sous-domaine correspondant, on calcule un angle azimutal par rapport à une direction de référence, qui décrit l'orientation angulaire du modèle de réseau du domaine de réseau affecté.

**55.** Procédé selon au moins l'une des revendications 17 à 54, **caractérisé en ce que** le motif à réseau diffractant est produit avec un domaine étendu de motif à réseau diffractant, domaine qui, quand on l'observe à partir d'une distance d'observation présélectionnée, apparaît avec une impression colorée pour l'essentiel constante, par le fait que

- le domaine étendu de motif à réseau diffractant est décomposé en un grand nombre de domaines partiels, pour chacun desquels on détermine dans l'étape d) une constante de réseau et une orientation angulaire, auquel cas on utilise pour la détermination un vecteur d'observation qui va du domaine partiel considéré à l'oeil de l'observateur, et
- dans l'étape e), le domaine du motif à réseau diffractant est produit dans le substrat avec ces domaines partiels, et chacun des domaines partiels est rempli d'un modèle de réseau, présentant les constantes de réseau déterminées dans l'étape d), et une orientation angulaire.

**56.** Procédé selon au moins l'une des revendications 17 à 55, **caractérisé en ce que** le motif à réseau diffractant reçoit, à l'aide d'un procédé de lithographie optique ou à faisceau d'électrons, une inscription par un matériau sensible au rayonnement, en particulier une couche de réserve appliquée sur un substrat, pour provoquer dans cette couche un changement d'état, de préférence pour produire une structure en relief.

**57.** Procédé selon la revendication 56, **caractérisé en ce que**, après fabrication d'une structure en relief, on applique une couche de métallisation sur le matériau sensible au rayonnement, et **en ce qu'**on en produit un moulage galvanique.

**58.** Procédé selon la revendication 57, **caractérisé en ce qu'**on utilise le moulage, ou un autre moulage de ce dernier, en tant que poinçon d'estampage, pour estamper un motif à réseau diffractant dans un substrat.

59. Procédé selon au moins l'une des revendications 56 à 58, **caractérisé en ce qu'**on produit un motif à réseau diffractant incurvé, par le fait que l'on inscrit dans un substrat plan le motif à réseau diffractant, en tenant compte des distorsions apparaissant lors de la déformation subséquente, et que le substrat plan est ensuite mis sous la forme incurvée souhaitée.

60. Procédé selon au moins l'une des revendications 56 à 58, **caractérisé en ce qu'**on forme un motif à réseau diffractant incurvé, par le fait que l'on applique sur un objet ayant la forme incurvée souhaitée un matériau sensible au rayonnement, et que l'on inscrit le motif à réseau diffractant dans le matériau sensible au rayonnement, en déplaçant l'objet et/ou le dispositif de lithographie.

61. Procédé selon au moins l'une des revendications 17 à 60, **caractérisé en ce que** le motif à réseau diffractant est produit sans trame dans le substrat.

62. Procédé selon l'une des revendications 17 à 61, **caractérisé en ce que** les régions de vraies couleurs sont, pour plus de 90 % et en particulier pour plus de 95 %, formées de deux domaines de couleurs spectrales.

63. Procédé selon la revendication 17, **caractérisé en ce que** les domaines de vraies couleurs sont, dans la partie restante, formés au moins partiellement à partir d'un domaine de couleurs spectrales.

64. Procédé selon la revendication 17 ou 63, **caractérisé en ce que** les domaines de vraies couleurs sont, dans la partie restante, formés au moins partiellement de trois domaines de couleurs spectrales.

65. Objet, en particulier support de données ou élément de sécurité pour application sur un support de données, comportant un motif à réseau diffractant selon l'une des revendications 1 à 16.

66. Objet selon la revendication 65, **caractérisé en ce que** le motif à réseau diffractant présente, dans des orientations différentes, plusieurs images, de sorte qu'il se forme pour l'observateur en particulier une image changeante, une image de mouvement, une image stéréo, une image de décor ou un motif à réseau, avec une impression d'image qui est constante lors du mouvement.

67. Objet selon au moins l'une des revendications 65 ou 66, **caractérisé en ce que** le motif à réseau diffractant est sans trame.

68. Objet selon au moins l'une des revendications 65 à 67, **caractérisé en ce que** le motif à réseau diffractant est transparent et est configuré pour observation par transparence.

69. Objet selon au moins l'une des revendications 65 à 68, **caractérisé en ce que** l'objet est un élément de sécurité, en particulier un filigrane de sécurité, une étiquette ou un élément par transfert.

70. Objet selon au moins l'une des revendications 65 à 69, **caractérisé en ce que** l'objet est incurvé dans le domaine du motif à réseau diffractant, et en particulier présente une incurvation cylindrique.

71. Objet selon au moins l'une des revendications 65 à 70, **caractérisé en ce que** l'objet est un support de données, en particulier un billet de banque, un document de valeur, un passeport, une carte d'identité ou un certificat.

72. Utilisation d'un motif à réseau diffractant selon l'une des revendications 1 à 16 ou d'un objet selon l'une des revendications 65 à 71 pour la sécurité d'objets de type quelconque.

Fig. 1

Fig. 2

14

18-1

18-2

18-3

## Fig. 3a

14

18-1   18-2   18-3

## Fig. 3b

14

18-2

18-1

## Fig. 3c

14

18-2

18-1

## Fig. 3d

14

22-1

22-2

20-1    20-2

## Fig. 4a

14

23-1

23-2

20-1    20-2

## Fig.4b

14

26-2

26-1

24-1    24-2

## Fig. 4c

14

27-1

27-2

24-1    24-2

## Fig. 4d

Fig. 5

Fig. 6

Fig. 7

50

52-1

52-2

52-3

## Fig. 8a

60

62-1

62-2

62-3

## Fig. 8b

Fig. 9

Fig. 10

**EP 1 831 736 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0240262 A2
- EP 0585966 A2
- DE 102004006771
- DE 10224115
- DE 10243413
- EP 200411497 W
- DE 10226115